# EUROPEAN PATENT APPLICATION

(11) **EP 4 395 304 A1**
(43) Date of publication of application: **03.07.2024**
(21) Application number: 23778017.6
(22) Date of filing: 23.03.2023
(51) Int. Cl.: H04N 7/14

(54) **COMMUNICATION METHOD, DEVICE AND SYSTEM**

(30) Priority: 31.03.2022 CN 202210334450
(71) Applicant: Huawei Technologies Co., Ltd., Shenzhen, Guangdong 518129 (CN)
(72) Inventor: HUANG, Shunyan, Shenzhen, Guangdong 518129 (CN); FENG, Junhui, Shenzhen, Guangdong 518129 (CN); ZHANG, Chunhe, Shenzhen, Guangdong 518129 (CN); ZHUANG, Naifeng, Shenzhen, Guangdong 518129 (CN); WANG, Kun, Shenzhen, Guangdong 518129 (CN); XU, Changyue, Shenzhen, Guangdong 518129 (CN)
(74) Representative: Gill Jennings & Every LLP
(86) International application number: PCT/CN2023/083485
(87) International publication number: WO 2023/185648

(57) **Abstract**

A communication method, an apparatus, and a system are provided, and relate to the field of communication technologies, so that a user can present, to a peer party in a call process, a mark made by the user on a target object in a video picture. The method includes: establishing a video call media transmission channel, and transmitting a call video stream between a call terminal and a peer call terminal through the video call media transmission channel, to implement a video call service between the call terminal and the peer call terminal; presenting a first video picture on a call screen of the call terminal based on target media data; detecting a mark operation performed by a user on a target object in the first video picture, and generating marking trace data for describing a marking trace generated by the mark operation; and transmitting marking media data to the peer call terminal through the video call media transmission channel, so that the peer call terminal presents a second video picture on a call screen of the peer call terminal based on the marking media data, where the second video picture includes the marking trace.

## Description

This application claims priority to Chinese Patent Application No. 202210334450.9, filed with the China National Intellectual Property Administration on March 31, 2022 and entitled "COMMUNICATION METHOD, APPARATUS, AND SYSTEM", which is incorporated herein by reference in its entirety.

### TECHNICAL FIELD

Embodiments of this application relate to the field of communication technologies, and in particular, to a communication method, an apparatus, and a system.

### BACKGROUND

In scenarios such as a two-party call or a multi-party call (for example, a multi-party video conference), communication efficiency still needs to be improved. If a call participant can mark a video picture from a peer party, and the peer party can see a marking trace made on an object in the video picture, a communication means other than a voice and a video is added, and communication can be more convenient and effective.

How to add a marking function for a video picture based on an existing call function is a problem to be resolved.

### SUMMARY

Embodiments of this application provide a communication method, an apparatus, and a system, to add a marking function for a video picture based on an existing call function, so that a user can present, to a peer party in a call process, a mark made by the user on a target object in the video picture.

To achieve the foregoing objective, the following technical solutions are used in embodiments of this application.

According to a first aspect, an embodiment of this application provides a communication method. The method is performed by a call terminal, and the method includes: establishing a video call media transmission channel, and transmitting a call video stream between the call terminal and a peer call terminal through the video call media transmission channel, to implement a video call service between the call terminal and the peer call terminal, where the call video stream includes video content captured by the call terminal or the peer call terminal; presenting a first video picture on a call screen of the call terminal based on target media data; detecting a mark operation performed by a user on a target object in the first video picture, and generating marking trace data, where the marking trace data describes a marking trace generated by the mark operation; and transmitting marking media data to the peer call terminal through the video call media transmission channel, so that the peer call terminal presents a second video picture on a call screen of the peer call terminal based on the marking media data, where the second video picture includes the marking trace.

According to the technical solution provided in embodiments of this application, the call terminal may transmit the marking media data based on the existing video call media transmission channel, there is no need to spend additional time establishing a transmission channel dedicated to transmitting the marking media data, and there is no need to occupy additional port resources of terminals (including the call terminal and the peer call terminal). In this way, port resources occupied when a target object in a video picture is marked during a call can be saved.

Further, compared with an existing communication method, in the technical solution provided in embodiments of this application, there is no need to install a video marking app on a user call terminal and a customer service call terminal. In this way, an operator does not need to perform a complex related operation, and the operator is not required to have a strong operation skill.

In a possible implementation, a form of the mark operation performed by the user on the first video picture is not limited in embodiments of this application. For example, the mark operation may be a tap operation on the first video picture, or may be a draw operation on a first whiteboard picture. For example, lines in different forms are drawn in the first video picture to mark the target object. For example, the target object is circled by using a rectangular box, a circle, a triangle, or an irregular closed shape, or the target object is marked by using a solid line, a dashed line, an arrow line, or another special symbol (for example, a five-pointed star is drawn beside the target object). It may be understood that, after the user performs the mark operation on the target object in the first video picture, the marking trace corresponding to specific behavior of the mark operation can be formed, and the user can mark the target object in any manner in which the target object can be marked. The marking trace data includes but is not limited to a timestamp, a color, a shape, a location (for example, a location parameter such as coordinates of each point on the marking trace), or the like that can indicate the marking trace. For example, a marking trace in a video picture is a red circle, and marking trace data includes data indicating the video picture (for example, a timestamp or identification information of the video picture), data indicating that a color of the marking trace is red, data indicating that a shape of the marking trace is a circle, and data indicating circle center coordinates and a radius of the marking trace.

In a possible implementation, the target media data includes data corresponding to a first video frame, the first video frame is received from the peer call terminal through the video call media transmission channel and is used to present the first video picture, and the presenting a first video picture on a call screen of the call terminal based on target media data includes: decoding the data corresponding to the first video frame to present the first video picture on the call screen.

Optionally, a media server first receives video stream data (the video stream data is the call video stream) from the peer call terminal through a second video call media transmission channel, where the video stream data includes the data corresponding to the first video frame. Then, the media server sends the video stream data to the call terminal through a first video call media transmission channel. In this way, the call terminal obtains the data corresponding to the first video frame from the video stream data, and presents the first video picture on the call screen of the call terminal based on the data corresponding to the first video frame.

Optionally, a media server first receives video stream data (the video stream data is the call video stream) from the peer call terminal through a second video call media transmission channel, where the video stream data includes the data corresponding to the first video frame. Then, the media server obtains the data corresponding to the first video frame from the video stream data; and then the media server sends the data corresponding to the first video frame to the call terminal through a first video call media transmission channel. In this way, the call terminal may present the first video picture on the call screen of the call terminal based on the data corresponding to the first video frame.

Alternatively, in a possible implementation, the target media data includes data corresponding to a target image, the target image is locally stored in the call terminal and is used to present the first video picture, and the presenting a first video picture based on target media data includes: decoding the data corresponding to the target image to present the first video picture on the call screen.

In a possible implementation, the marking media data includes data corresponding to a second video frame, and the second video frame is used to present the second video picture in which the marking trace is embedded; or the marking media data includes the marking trace data.

In a possible implementation, the communication method provided in this embodiment of this application further includes: stopping transmitting the call video stream through the video call media transmission channel. In this way, the marking media data may be transmitted through the video call media transmission channel.

In a possible implementation, the video call media transmission channel includes a first video call media transmission channel between the call terminal and a media server, and a second video call media transmission channel between the peer call terminal and the media server. The transmitting marking media data to the peer call terminal through the video call media transmission channel includes: transmitting first marking media data to the media server through the first video call media transmission channel, to trigger the media server to transmit second marking media data to the peer call terminal through the second video call media transmission channel. Both the first marking media data and the second marking media data include the data corresponding to the second video frame; both the first marking media data and the second marking media data are the marking trace data; or the first marking media data is the marking trace data, and the second marking media data is the data corresponding to the second video frame.

The first marking media data and the second marking media data are the same, and both include the data corresponding to the second video frame. In this case, before the call terminal transmits the marking media data to the media server, the call terminal presents, in a superimposition manner, the marking trace on the first video picture presented on the call screen of the call terminal, to form the second video picture, and sends, to the media server, the data corresponding to the second video frame used to present the second video picture. Then, the media server sends the data corresponding to the second video frame to the peer call terminal. In this way, after receiving the data corresponding to the second video frame, the peer call terminal can present the second video picture on the call screen of the peer call terminal.

The first marking media data and the second marking media data are the same, and both are the marking trace data. In this case, after the call terminal obtains the marking trace data, the call terminal sends the marking trace data to the media server. The media server forwards the marking media data to the peer call terminal. Then, the peer call terminal superimposes the target media data (the target media data is from video content captured by the peer call terminal) and the marking trace data to obtain the data corresponding to the second video frame, and presents the second video picture on the call screen of the peer call terminal based on the data corresponding to the second video frame.

The first marking media data is different from the second marking media data, the first marking media data is the marking trace data, and the second marking media data is the data corresponding to the second video frame. In this case, after the call terminal obtains the marking trace data, the call terminal sends the marking trace data to the media server. The media server superimposes the target media data (the target media data is obtained by the media server from the peer call terminal) and the marking trace data to obtain the data corresponding to the second video frame, and sends the data corresponding to the second video frame to the peer call terminal. Therefore, the peer call terminal may present the second video picture on the call screen of the peer call terminal based on the data corresponding to the second video frame.

In a possible implementation, the video call media transmission channel is a direct video call media transmission channel between the call terminal and the peer call terminal; and the transmitting marking media data to the peer call terminal through the video call media transmission channel includes: transmitting the marking media data to the peer call terminal through the direct video call media transmission channel.

In an implementation, the marking media data includes the data corresponding to the second video frame. In this case, the call terminal presents, in a superimposition manner, the marking trace on the first video picture presented on the call screen of the call terminal, to form the second video picture, and sends, to the peer call terminal, the data corresponding to the second video frame used to present the second video picture. In this way, after receiving the data corresponding to the second video frame, the peer call terminal can present the second video picture on the call screen of the peer call terminal.

In another implementation, the marking media data is the marking trace data. In this case, after the call terminal obtains the marking trace data, the call terminal sends the marking trace data to the peer call terminal. Then, the peer call terminal superimposes the target media data (the target media data is from video content captured by the peer call terminal) and the marking trace data to obtain the data corresponding to the second video frame, and presents the second video picture on the call screen of the peer call terminal based on the data corresponding to the second video frame.

In a possible implementation, the communication method provided in this embodiment of this application further includes: receiving transmission channel indication information from the media server, where the transmission channel indication information indicates the call terminal to transmit the marking media data through the video call media transmission channel, and the transmission channel indication information may be carried in a SIP message.

In this embodiment of this application, an explicit indication method (that is, sending the transmission channel indication information) may be used to indicate to transmit the marking media data through the video call media transmission channel. In some cases, the media server may alternatively indicate, by using an implicit indication method, to transmit the marking media data through the video call media transmission channel.

In a possible implementation, the communication method provided in this embodiment of this application further includes: sending a video picture marking application to the media server, where the video picture marking application includes an identifier of the peer call terminal, and the identifier is used to apply for a mark operation on a video picture corresponding to the peer call terminal; and receiving, from the media server, video content sent by the peer call terminal, to present the first video picture. It may be understood that, there may be a plurality of peer call terminals that communicate with the call terminal, and in a process of communicating with the plurality of peer call terminals, the call terminal may apply for transmitting the marking media data to a specific peer call terminal.

In a possible implementation, the communication method provided in this embodiment of this application further includes: confirming that the call terminal has a resource for performing a mark operation on the first video picture. In this embodiment of this application, after the call terminal sends the video picture marking request, a status of the call terminal may change. For example, a current network signal of the call terminal may be weak, or the call terminal is in a 2G/3G network and a bandwidth of the network is insufficient to support the call terminal in performing the mark operation, or the video call media transmission channel is unavailable, or the user corresponding to the call terminal is inconvenient to perform the mark operation. In these cases, the call terminal does not have the resource for performing the mark operation on the first video picture.

In a possible implementation, the confirming that the call terminal has a resource for performing a mark operation on the first video picture includes: receiving a SIP message from the media server, where the SIP message includes a mark operation confirmation identifier, and the mark operation confirmation identifier is used to confirm whether the call terminal has the resource for performing the mark operation on the first video picture; and sending a response message for the SIP message to the media server, where the response message includes a mark operation response identifier, and the mark operation response identifier indicates that the call terminal has the resource for performing the mark operation on the first video picture. Optionally, the mark operation confirmation identifier in the SIP message may be carried in a header field of the SIP message; or when the SIP message includes SDP information of the media server, the mark operation confirmation identifier may be carried in the SDP information of the media server.

According to a second aspect, an embodiment of this application provides a communication method. The method is performed by a media server, and the method includes: establishing a first video call media transmission channel and a second video call media transmission channel, where the first video call media transmission channel is a video call media transmission channel between the media server and a call terminal, and the second video call media transmission channel is a video call media transmission channel between the media server and a peer call terminal; transmitting a call video stream between the call terminal and the peer call terminal through the first video call media transmission channel and the second video call media transmission channel, to implement a video call service between the call terminal and the peer call terminal, where the call video stream includes video content captured by the call terminal or the peer call terminal; receiving first marking media data from the call terminal through the first video call media transmission channel, where the first marking media data is used to present a second video picture on a call screen of the peer call terminal, the second video picture includes a marking trace, the marking trace is a marking trace generated by a mark operation performed by a user on a target object in a first video picture presented on a call screen of the call terminal, and the first video picture is a video picture presented on the call screen of the call terminal based on target data; and transmitting second marking media data to the peer call terminal through the second video call media transmission channel, where the second marking media data is used to present the second video picture on the call screen of the peer call terminal.

According to the technical solution provided in embodiments of this application, as a transmission medium between the call terminal and the peer call terminal, the media server may transmit marking media data (including the first marking media data and the second marking media data) based on an existing video call media transmission channel. Thus, there is no need to spend additional time establishing a transmission channel dedicated to transmitting the marking media data, and there is no need to occupy additional port resources of terminals (including the call terminal and the peer call terminal). In this way, port resources occupied when a target object in a video picture is marked during a call can be saved.

Further, compared with an existing communication method, in the technical solution provided in embodiments of this application, there is no need to install a video marking app on a user call terminal and a customer service call terminal. In this way, an operator does not need to perform a complex related operation, and the operator is not required to have a strong operation skill.

In a possible implementation, the target media data includes data corresponding to a first video frame, and the first video frame is received by the call terminal from the peer call terminal through the first video call media transmission channel and is used to present the first video picture.

Alternatively, in a possible implementation, the target media data includes data corresponding to a target image, and the target image is locally stored in the call terminal and is used to present the first video picture.

In a possible implementation, both the first marking media data and the second marking media data include data corresponding to a second video frame, and the second video frame is used to present the second video picture in which the marking trace is embedded; both the first marking media data and the second marking media data are marking trace data; or the first marking media data is the marking trace data, and the second marking media data is the data corresponding to the second video frame.

In a possible implementation, the communication method provided in this embodiment of this application further includes: sending first transmission channel indication information to the call terminal, where the first transmission channel indication information indicates the call terminal to transmit the first marking media data through the first video call media transmission channel.

In a possible implementation, the communication method provided in this embodiment of this application further includes: sending second transmission channel indication information to the peer call terminal, where the second transmission channel indication information indicates the peer call terminal to transmit the second marking media data through the second video call media transmission channel.

In a possible implementation, the communication method provided in this embodiment of this application further includes: stopping transmitting the call video stream through the first video call media transmission channel.

In a possible implementation, the communication method provided in this embodiment of this application further includes: stopping transmitting the call video stream through the second video call media transmission channel; and stopping transmitting the call video stream through the second video call media transmission channel.

In a possible implementation, the communication method provided in this embodiment of this application further includes: receiving a video picture marking application from the call terminal, where the video picture marking application includes an identifier of the peer call terminal, and the identifier is used to apply for a mark operation on a video picture corresponding to the peer call terminal; sending a video picture marking request to the peer call terminal, where the video picture marking request is used to request to perform a mark operation on the first video picture; and receiving a response message for the video picture marking request from the peer call terminal, where the response message indicates that the peer call terminal agrees the mark operation on the first video picture.

Optionally, if a calling party initiates a voice call, the video picture marking request further indicates that the voice call is requested to be converted into a video call, and the response message for the video picture marking request further indicates that the peer call terminal agrees conversion from the voice call to the video call.

Optionally, the first video picture is from video content received by the call terminal from the peer call terminal, and the response message for the video picture marking request further indicates that the peer call terminal allows the media server to capture the call video stream sent by the peer call terminal to the media server.

In a possible implementation, the communication method provided in this embodiment of this application further includes: confirming that the call terminal has a resource for performing the mark operation on the first video picture.

In a possible implementation, the confirming that the call terminal has a resource for performing the mark operation on the first video picture includes: sending a SIP message to the call terminal, where the SIP message includes a mark operation confirmation identifier, and the mark operation confirmation identifier is used to confirm whether the call terminal has the resource for performing the mark operation on the first video picture; and receiving a response message for the SIP message from the call terminal, where the response message includes a mark operation response identifier, and the mark operation response identifier indicates that the call terminal has the resource for performing the mark operation on the first video picture.

For related content and technical effects of the second aspect, refer to content and technical effects in any one of the first aspect and the possible implementations of the first aspect.

According to a third aspect, an embodiment of this application provides a call terminal, including a processing module, a generation module, and a sending module. The processing module is configured to: establish a video call media transmission channel, and control the call terminal to transmit a call video stream between the call terminal and a peer call terminal through the video call media transmission channel, to implement a video call service between the call terminal and the peer call terminal; and present a first video picture on a call screen of the call terminal based on target media data. The generation module is configured to: detect a mark operation performed by a user on a target object in the first video picture, and generate marking trace data, where the marking trace data describes a marking trace generated by the mark operation. The sending module is configured to transmit marking media data to the peer call terminal through the video call media transmission channel, so that the peer call terminal presents a second video picture on a call screen of the peer call terminal based on the marking media data, where the second video picture includes the marking trace.

In a possible implementation, the target media data includes data corresponding to a first video frame, and the first video frame is received from the peer call terminal through the video call media transmission channel and is used to present the first video picture; and the processing module is specifically configured to decode the data corresponding to the first video frame to present the first video picture on the call screen.

Alternatively, in a possible implementation, the target media data includes data corresponding to a target image, and the target image is locally stored in the call terminal and is used to present the first video picture; and the processing module is specifically configured to decode the data corresponding to the target image to present the first video picture on the call screen.

In a possible implementation, the marking media data includes data corresponding to a second video frame, and the second video frame is used to present the second video picture in which the marking trace is embedded; or the marking media data includes the marking trace data.

In a possible implementation, the processing module is further configured to control the call terminal to stop transmitting the call video stream through the video call media transmission channel.

In a possible implementation, the video call media transmission channel includes a first video call media transmission channel between the call terminal and a media server, and a second video call media transmission channel between the peer call terminal and the media server; and the sending module is specifically configured to transmit first marking media data to the media server through the first video call media transmission channel, to trigger the media server to transmit second marking media data to the peer call terminal through the second video call media transmission channel.

In a possible implementation, both the first marking media data and the second marking media data include the data corresponding to the second video frame; both the first marking media data and the second marking media data are the marking trace data; or the first marking media data is the marking trace data, and the second marking media data is the data corresponding to the second video frame.

In a possible implementation, the video call media transmission channel is a direct video call media transmission channel between the call terminal and the peer call terminal; and the sending module is specifically configured to transmit the marking media data to the peer call terminal through the direct video call media transmission channel.

In a possible implementation, the call terminal further includes a receiving module; and the receiving module is configured to receive transmission channel indication information from the media server, where the transmission channel indication information indicates the call terminal to transmit the marking media data through the video call media transmission channel.

In a possible implementation, the sending module is further configured to send a video picture marking application to the media server, where the video picture marking application includes an identifier of the peer call terminal, and the identifier is used to apply for a mark operation on a video picture corresponding to the peer call terminal.

In a possible implementation, the receiving module is further configured to receive a session initiation protocol SIP message from the media server, where the SIP message includes a mark operation confirmation identifier, and the mark operation confirmation identifier is used to confirm whether the call terminal has a resource for performing a mark operation on the first video picture; and the sending module is further configured to send a response message for the SIP message to the media server, where the response message includes a mark operation response identifier, and the mark operation response identifier indicates that the call terminal has the resource for performing the mark operation on the video picture.

According to a fourth aspect, an embodiment of this application provides a media server, including a processing module, a receiving module, and a sending module. The processing module is configured to: establish a first video call media transmission channel and a second video call media transmission channel, where the first video call media transmission channel is a video call media transmission channel between the media server and a call terminal, and the second video call media transmission channel is a video call media transmission channel between the media server and a peer call terminal; and control the receiving module or the sending module to transmit a call video stream between the call terminal and the peer call terminal through the first video call media transmission channel and the second video call media transmission channel, to implement a video call service between the call terminal and the peer call terminal. The receiving module is configured to receive first marking media data from the call terminal through the first video call media transmission channel, where the first marking media data is used to present a second video picture on a call screen of the peer call terminal, the second video picture includes a marking trace, the marking trace is a marking trace generated by a mark operation performed by a user on a target object in a first video picture presented on a call screen of the call terminal, and the first video picture is a video picture presented on the call screen of the call terminal based on target data. The sending module is configured to transmit second marking media data to the peer call terminal through the second video call media transmission channel, where the second marking media data is used to present the second video picture on the call screen of the peer call terminal.

In a possible implementation, the target media data includes data corresponding to a first video frame, and the first video frame is received by the call terminal from the peer call terminal through the first video call media transmission channel and is used to present the first video picture.

Alternatively, in a possible implementation, the target media data includes data corresponding to a target image, and the target image is locally stored in the call terminal and is used to present the first video picture.

In a possible implementation, both the first marking media data and the second marking media data include data corresponding to a second video frame, and the second video frame is used to present the second video picture in which the marking trace is embedded; both the first marking media data and the second marking media data are marking trace data; or the first marking media data is the marking trace data, and the second marking media data is the data corresponding to the second video frame.

In a possible implementation, the sending module is further configured to: send first transmission channel indication information to the call terminal, where the first transmission channel indication information indicates the call terminal to transmit the first marking media data through the video call media transmission channel; and send second transmission channel indication information to the peer call terminal, where the second transmission channel indication information indicates the peer call terminal to transmit the second marking media data through the video call media transmission channel.

In a possible implementation, the processing module is further configured to: control the media server to stop transmitting the call video stream through the first video call media transmission channel; and control the media server to stop transmitting the call video stream through the second video call media transmission channel.

In a possible implementation, the receiving module is further configured to receive a video picture marking application from the call terminal, where the video picture marking application includes an identifier of the peer call terminal, and the identifier is used to apply for a mark operation on a video picture corresponding to the peer call terminal; the sending module is further configured to send a video picture marking request to the peer call terminal, where the video picture marking request is used to request to perform a mark operation on the video picture; and the receiving module is further configured to receive a response message for the video picture marking request from the peer call terminal, where the response message indicates that the peer call terminal agrees the mark operation on the video picture.

In a possible implementation, the sending module is further configured to send a session initiation protocol SIP message to the call terminal, where the SIP message includes a mark operation confirmation identifier, and the mark operation confirmation identifier is used to confirm whether the call terminal has a resource for performing the mark operation on the first video picture; and the receiving module is further configured to receive a response message for the SIP message from the call terminal, where the response message includes a mark operation response identifier, and the mark operation response identifier indicates that the call terminal has the resource for performing the mark operation on the first video picture.

According to a fifth aspect, an embodiment of this application provides a call terminal, including a memory and at least one processor connected to the memory. The memory is configured to store computer program code, the computer program code includes computer instructions, and when the computer instructions are executed by the at least one processor, the call terminal is enabled to perform the method according to any one of the first aspect and the possible implementations of the first aspect.

According to a sixth aspect, an embodiment of this application provides a media server, including a memory and at least one processor connected to the memory. The memory is configured to store computer program code, the computer program code includes computer instructions, and when the computer instructions are executed by the at least one processor, the media server is enabled to perform the method according to any one of the second aspect and the possible implementations of the second aspect.

According to a seventh aspect, an embodiment of this application provides a computer-readable storage medium, including computer instructions. When the computer instructions are run on a call terminal, the call terminal is enabled to perform the method according to any one of the first aspect and the possible implementations of the first aspect.

According to an eighth aspect, an embodiment of this application provides a computer-readable storage medium, including computer instructions. When the computer instructions are run on a media server, the media server is enabled to perform the method according to any one of the second aspect and the possible implementations of the second aspect.

According to a ninth aspect, an embodiment of this application provides a computer program product. When the computer program product runs on a computer, the method according to any one of the first aspect and the possible implementations of the first aspect is performed.

According to a tenth aspect, an embodiment of this application provides a computer program product. When the computer program product runs on a computer, the method according to any one of the second aspect and the possible implementations of the second aspect is performed.

According to an eleventh aspect, an embodiment of this application provides a chip, including a memory and a processor. The memory is configured to store computer instructions. The processor is configured to invoke the computer instructions from the memory and run the computer instructions, so that a call terminal performs the method according to any one of the first aspect and the possible implementations of the first aspect.

According to a twelfth aspect, an embodiment of this application provides a chip, including a memory and a processor. The memory is configured to store computer instructions. The processor is configured to invoke the computer instructions from the memory and run the computer instructions, so that a media server performs the method according to any one of the second aspect and the possible implementations of the second aspect.

According to a thirteenth aspect, an embodiment of this application provides a communication system, including a call terminal and a media server. The call terminal performs the method according to any one of the first aspect and the possible implementations of the first aspect, and the media server performs the method according to any one of the second aspect and the possible implementations of the second aspect.

It may be understood that, for beneficial effects achieved by the technical solutions in the third aspect to the thirteenth aspect and the corresponding possible implementations, refer to the technical effects of the first aspect and the second aspect and the corresponding possible implementations. Details are not described herein again.

### BRIEF DESCRIPTION OF DRAWINGS

FIG. 1 is a schematic diagram of an architecture of a communication system in a service scenario of a manual customer service according to an embodiment of this application;
FIG. 2 is a schematic flowchart of a voice call according to an embodiment of this application;
FIG. 3 is a schematic flowchart of a video call according to an embodiment of this application;
FIG. 4A is a schematic diagram of hardware of a mobile phone according to an embodiment of this application;
FIG. 4B is a block diagram of a software structure of a mobile phone according to an embodiment of this application;
FIG. 5 is a schematic diagram of hardware of a server according to an embodiment of this application;
FIG. 6 is a schematic diagram 1 of a communication method according to an embodiment of this application;
FIG. 7A and FIG. 7B are a schematic diagram 2 of a communication method according to an embodiment of this application;
FIG. 8 is a schematic diagram of a structure of a call terminal according to an embodiment of this application;
FIG. 9 is a schematic diagram of a structure of another call terminal according to an embodiment of this application;
FIG. 10 is a schematic diagram of a structure of a media server according to an embodiment of this application; and
FIG. 11 is a schematic diagram of a structure of another media server according to an embodiment of this application.

### DESCRIPTION OF EMBODIMENTS

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first video call media transmission channel, a second video call media transmission channel, and the like are used to distinguish between different video call media transmission channels, but are not used to describe a specific sequence of the video call media transmission channels.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

In the descriptions of embodiments of this application, unless otherwise stated, "a plurality of" means two or more. For example, a plurality of call terminals refer to two or more call terminals.

Currently, based on a mobile network, a voice call or a video call between users may be implemented by using a terminal. Using the voice call as an example, a user 1 may dial, by using a terminal 1 held by the user 1, a number (for example, a phone number) of a terminal 2 held by a user 2. After the user 2 answers by using the terminal 2, a call connection may be established between the terminal 1 held by the user 1 and the terminal 2 held by the user 2, so that the user 1 and the user 2 may perform a voice call. For example, the terminal 1 captures a voice of the user 1, and sends the captured voice to the terminal 2, and the terminal 2 captures a voice of the user 2, and sends the captured voice to the terminal 1.

It may be understood that, in a scenario of a call between terminals, one of the terminals may be referred to as a call terminal, and a peer end that communicates with the call terminal is referred to as a peer call terminal. For example, if the terminal 1 is a call terminal, the terminal 2 is a peer call terminal. Optionally, one call terminal may have a plurality of peer call terminals. For example, three terminals (for example, a terminal 1, a terminal 2, and a terminal 3) perform a three-party conversation, where the terminal 1 is a call terminal, and peer ends of the terminal 1, that is, the terminal 2 and the terminal 3, are both peer call terminals.

The following uses two call terminals (that is, one call terminal and one peer call terminal) as an example to briefly describe a transmission principle of a media stream in a process of performing a voice call and a video call between the call terminal and the peer call terminal.

When the call terminal performs a voice call with the peer call terminal, a media stream transmitted between the call terminal and the peer call terminal is a voice stream. After the call terminal establishes a voice call media transmission channel (which may also be referred to as a voice stream transmission channel for short) with the peer call terminal, the call terminal and the peer call terminal may transmit voice streams based on the voice stream transmission channel. For example, the call terminal sends, to the peer call terminal through the voice stream transmission channel, a voice stream that is of a user corresponding to the call terminal and that is captured by a microphone of the call terminal, and the peer call terminal sends, to the call terminal through the voice stream transmission channel, a voice stream that is of a peer user corresponding to the peer call terminal and that is captured by a microphone of the peer call terminal.

When the call terminal performs a video call with the peer call terminal, media streams transmitted between the call terminal and the peer call terminal include a voice stream and a video stream, and transmission channels of the voice stream and the video stream are different. Specifically, after a voice call media transmission channel (that is, a voice stream transmission channel) and a video call media transmission channel (which may be referred to as a video stream transmission channel for short) are established, the call terminal and the peer call terminal may transmit voice streams based on the voice stream transmission channel, and the call terminal and the peer call terminal may transmit video streams based on the video stream transmission channel. For example, the call terminal sends, to the peer call terminal through the voice stream transmission channel, a voice stream that is of a user corresponding to the call terminal and that is captured by a microphone of the call terminal, and the peer call terminal sends, to the call terminal through the voice stream transmission channel, a voice stream that is of a peer user corresponding to the peer call terminal and that is captured by a microphone of the peer call terminal. The call terminal sends, to the peer call terminal through the video stream transmission channel, a video stream that is of the user corresponding to the call terminal and that is captured by a camera of the call terminal, and the peer call terminal sends, to the call terminal through the video stream transmission channel, a video stream that is of the peer user corresponding to the peer call terminal and that is captured by a camera of the peer call terminal.

Video marking is a video processing technology, and refers to marking one or more objects in a video picture, to mark an object that a user pays attention to in the video picture. For example, a video picture includes a person, an animal, and a building, and an object that a user pays attention to is the animal. Therefore, the animal in the video picture may be marked by using a video marking tool. For example, the animal object is circled by using a rectangular box, or the animal object is marked by using another mark (for example, an arrow or a curve).

Video marking is widely applied in daily life, and may bring many conveniences to daily life. For example, in scenarios such as remote teaching, home appliance maintenance, broadband maintenance, and remote loss assessment, one user may mark a target object in a video picture, and then send marking media data (the marking media data is used to present a video picture that includes a marking trace) to another user, so that the another user can more conveniently focus on required information in the video picture that includes the marking trace.

For example, in a home appliance repair scenario, when a fault occurs on a home appliance, a user (or a consumer) may find an after-sales service agency of the home appliance, for example, by dialing an after-sales service phone number, to reflect a fault problem, thereby helping the user resolve the fault. During troubleshooting, the user may describe the fault in language. If the description in language is unclear, in most cases, the after-sales service agency needs to send a staff member to check and troubleshoot the fault offline. This is inefficient. A relatively efficient manner of completing the after-sales service is as follows: The user sends an image or a video to the after-sales service agency to display a fault condition of the home appliance, and after capturing the image or the video of the home appliance, the user may perform a mark operation on a target object in a video picture in the image or the video to mark a fault point, for example, mark a button or an indicator of the home appliance in the image or the video picture. Then, marking media data is sent to the after-sales service agency, and a staff member of the after-sales service agency quickly learns of the fault point of the home appliance based on the marking media data, so that the problem of the user can be resolved in a targeted and efficient manner.

In a process in which two users perform a voice call or a video call, if one user needs to perform a mark operation on a target object in a video picture, the user marks the target object in the video picture, and after marking trace data is generated, sends marking media data to the other user, where the marking media data is used to present a video picture that includes a marking trace. Taking transmission of the video picture and the marking trace data between the foregoing call terminal and peer call terminal as an example, currently, an implementation is as follows: An application (APP) for video marking needs to be installed on both the call terminal and the peer call terminal, and a transmission channel dedicated to marking media data is established between the video marking app on the call terminal and the video marking app on the peer call terminal through a server, so that the call terminal and the peer call terminal transmit the marking media data through the transmission channel. For example, in one case, the call terminal uploads a video picture to the video marking app on the call terminal, and after performing a mark operation on a target object in the video picture in the video marking APP, sends marking media data to the peer call terminal through the transmission channel. In another case, the peer call terminal uploads a video picture to the video marking app on the peer call terminal, and after performing a mark operation on a target object in the video picture in the video marking app, sends marking media data to the call terminal through the transmission channel.

When the mark operation is performed on the target object in the video picture and the marking media data is transmitted in the process of the voice call or the video call between the two users, a transmission channel dedicated to transmitting the marking media data between the call terminal and the peer call terminal needs to be established, where the transmission channel is different from the foregoing voice stream transmission channel and video stream transmission channel.

It may be understood that, if the mark operation is performed on the target object in the video picture during the call between the call terminal and the peer call terminal, additional time needs to be consumed to establish the transmission channel for transmitting the marking media data, and an additional port also needs to be used on the call terminal or the peer call terminal to transmit the marking media data. For example, if video marking is performed during the voice call between the call terminal and the peer call terminal, a voice stream is transmitted between the call terminal and the peer call terminal based on the voice stream transmission channel, and the marking media data is transmitted between the call terminal and the peer call terminal based on the established transmission channel dedicated to transmitting the marking media data. For another example, if the mark operation is performed on the target object in the video picture during the video call between the call terminal and the peer call terminal, and a video stream captured by a camera is transmitted between the call terminal and the peer call terminal based on the video stream transmission channel, the marking media data is transmitted between the call terminal and the peer call terminal based on the established transmission channel dedicated to transmitting the marking media data. In conclusion, establishing the transmission channel dedicated to transmitting the marking media data needs to occupy additional time, and transmitting the marking media data needs to occupy additional port resources of the terminal.

For the problem that establishing the transmission channel dedicated to transmitting the marking media data needs to occupy additional time and needs to occupy additional port resources of the terminal in the conventional technology, embodiments of this application provide a communication method, an apparatus, and a system. The communication method may be applied to a process of a call between terminals. A call terminal, a media server, and a peer call terminal in a communication system interact with each other to establish a video call media transmission channel used to transmit a call video stream, and a call video stream between the call terminal and the peer call terminal is transmitted through the video call media transmission channel, to implement a video call service between the call terminal and the peer call terminal, where the call video stream includes video content captured by the call terminal or the peer call terminal. Then, a first video picture is presented on a call screen of the call terminal based on target media data. A mark operation performed by a user on a target object in the first video picture is detected, and marking trace data is generated, where the marking trace data describes a marking trace generated by the mark operation. Then, marking media data is transmitted to the peer call terminal through the established video call media transmission channel, so that the peer call terminal presents a second video picture on a call screen of the peer call terminal based on the marking media data, where the second video picture includes the marking trace. According to the technical solution provided in embodiments of this application, the marking media data may be transmitted between the call terminal, the media server, and the peer call terminal based on an existing video call media transmission channel, there is no need to spend additional time establishing a transmission channel dedicated to transmitting the marking media data, and there is no need to occupy additional port resources of call terminals.

Further, compared with an existing communication method, in the technical solution provided in embodiments of this application, there is no need to install a video marking app on a terminal. In this way, an operator does not need to perform a complex related operation, and the operator is not required to have a strong operation skill.

Optionally, the communication method provided in embodiments of this application may be applied to a process of a call between two call terminals, and may be applied to a process of a call between a plurality of call terminals.

Optionally, the communication method provided in embodiments of this application may be applied to a video conference scenario, a customer service scenario, and the like. The customer service scenario is a scenario in which a user makes a call to a customer service center (which may also be a customer service system). The call between the user and the customer service center may meet some service requirements of the user. For example, customer services such as electronic products, insurance, and mobile communication all relate to the customer service scenario. Generally, the user may call the customer service center to establish a call connection with the customer service center. Currently, in actual application, most customer service processes are as follows: The user calls the customer service center (makes a call). After answering the call, the customer service center first pushes (that is, plays) some prompt content (the prompt content is pre-stored by the customer service center) to the user. The user may select an option of a required service based on the prompt content, and the customer service center serves the user in a targeted manner based on the service option selected by the user (for example, replies to the service option selected by the user, to resolve a problem of the user).

In addition, the user may select a manual service based on the pushed prompt content. In this case, a service scenario of a manual customer service is entered. The service scenario of the manual customer service is a scenario in which the user talks with a staff member of the customer service center during the call between the user and the customer service center. That is, after the user selects the manual service based on the prompt content pushed by the customer service center, the customer service center continues to call the staff member of the customer service center (specifically, call a terminal held by the staff member by using a number of the terminal). In the following embodiments, the customer service center may be briefly referred to as a customer service or a customer service system, and the staff member of the customer service center may be briefly referred to as a customer service representative. The service scenario of the manual customer service is used as an example. A user calls a customer service system by using a call terminal held by the user (which may be referred to as a user call terminal for short). When the call is transferred to a manual service, after a customer service representative answers the call, a call terminal held by the customer service representative (which may be referred to as a customer service call terminal for short) communicates with the user call terminal. In embodiments of this application, after the customer service call terminal starts to communicate with the user call terminal, when the customer service representative guides the user for a problem of the user, the customer service representative may apply for video marking. Specifically, after performing a mark operation on a target object in a video picture, the customer service representative sends marking media data (used to present a video picture including a marking trace to the user) to the user call terminal. In this way, the user may learn, based on the video picture including the marking trace that is presented on the user call terminal, of a solution provided by the customer service representative, so that the problem of the user can be efficiently resolved, and service quality can be improved.

It should be noted that, in embodiments of this application, the service scenario of the manual customer service is used as an example to describe the communication method provided in embodiments of this application. It may be understood that, in the service scenario of the manual customer service, after the user call terminal initiates a call and the customer service call terminal answers the call, the user call terminal and the customer service call terminal may perform a mark operation on a target object in a video picture during the call.

Optionally, in embodiments of this application, the call initiated by the user call terminal may be a voice call, or may be a video call. It should be noted that, when the user initiates the voice call and calls the manual customer service, after the manual customer service in the customer service system answers, a voice stream transmission channel is first established through media resource negotiation. If a video picture marking application is initiated during the voice call, media resource renegotiation is further required to establish a video stream transmission channel, to convert the voice call to a video call. Then, marking media data is transmitted based on the video stream transmission channel corresponding to the video call. When the user initiates a video call, after the manual customer service in the customer service system answers, a video stream transmission channel is established through media resource negotiation, and then marking media data is transmitted based on the video stream transmission channel.

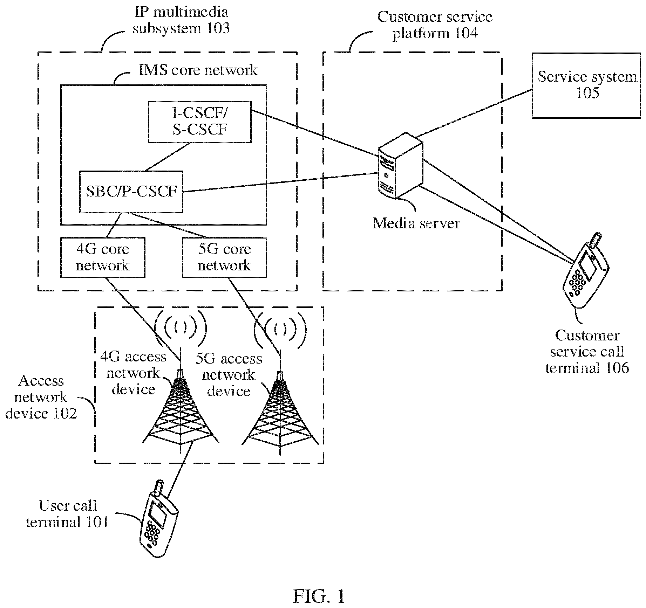

A communication system corresponding to a customer service scenario may be considered as a conference control system. The communication system relates to an access network, an IP multimedia subsystem (that is, an IMS, including a 4G/5G core network and an IMS core network), a customer service platform (which may also be referred to as a customer service system), a service system, and the like. The following describes an architecture of the communication system in the customer service scenario. As shown in FIG. 1, the communication system specifically includes: a user call terminal 101, an access network device 102, an IP multimedia subsystem 103, a customer service platform 104, a service system 105, and a customer service call terminal 106. The IP multimedia subsystem 103 includes a core network (which may be a 4G core network and/or a 5G core network) and an IMS core network. It may be understood that the 4G core network includes a gateway device (for example, an S-GW or a P-GW), the 5G core network includes a user plane function (UPF) network element, a mobility management function (AMF) network element, and the like, and the IMS core network includes a session border controller SBC, a proxy-call session control function P-CSCF device, a call session control function I-CSCF network element, and a serving-call session control function S-CSCF network element. The customer service platform 104 includes a media server.

SBC: provides secure access and media processing.

P-CSCF: is an ingress node device for the user call terminal to access the IMS core network, and is mainly responsible for signaling and message proxy.

I-CSCF: is a unified preliminary ingress node device of the IMS core network, and is responsible for assigning and querying an S-CSCF for subscriber registration.

S-CSCF: is a central node device of the IMS core network, and is mainly used for subscriber registration, authentication control, session routing, service triggering control, and session status information maintenance.

Media server: In embodiments of this application, in a communication system corresponding to a conventional customer service scenario, the customer service platform 104 includes a control server (which may also be a signaling server) and the media server. The signaling server is mainly responsible for signaling negotiation and processing, and controlling a user call terminal or a customer service call terminal to join or exit a call. The media server is mainly responsible for audio and video processing and playing, application and release of a call site, audio encoding and decoding, video encoding and decoding, and hybrid encoding. In some implementations, functions of the media server and the control server may be integrated into one server. In embodiments of this application, an example in which the functions of the media server and the control server are integrated into the media server is used to describe a communication method provided in embodiments of this application.

Service system: is responsible for determining to trigger different service processes based on numbers of a caller (for example, a user call terminal) and a callee and the like. Different services may include but are not limited to a video call, a video advertisement, an enterprise video show, and the like.

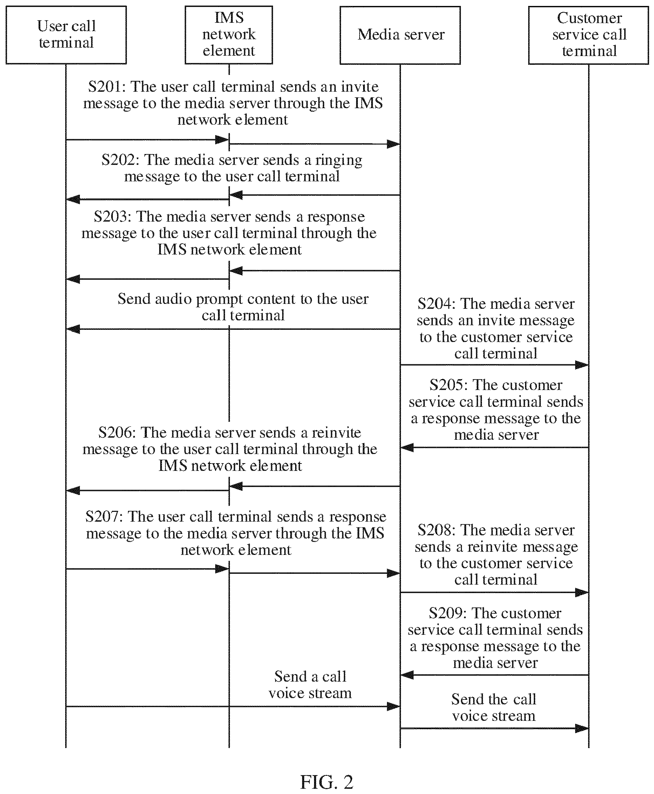

With reference to the architecture of the communication system shown in FIG. 1, a voice call process is described by using a voice call as an example on the basis that a user call terminal accesses an access network and establishes a session through a 4G core network or a 5G core network and an IMS core network, to facilitate understanding of the voice call process in a customer service scenario. Refer to FIG. 2. The voice call process includes the following steps.

S201: The user call terminal sends an invite (invite) message to a media server through an IMS network element.

Specifically, with reference to the schematic diagram of the architecture of the communication system shown in FIG. 1, an IMS includes a network element (including a gateway device/user plane function network element) of a 4G/5G core network, an SBC/P-CSCF network element of an IMS core network, and an I-CSCF/S-CSCF network element. In this embodiment of this application, these network elements in the IMS may be collectively referred to as IMS network elements. That the user call terminal sends the invite message to the media server through the IMS network element specifically includes: The user call terminal sends the invite message to the media server sequentially through the network element of the 4G/5G core network, the SBC/P-CSCF network element, and the I-CSCF/S-CSCF network element based on the diagram of the architecture shown in FIG. 1. It should be noted that the IMS network element is configured to transparently transmit a message between the user call terminal and the media server, and does not process the message.

It should be noted that, in the following embodiments, sending or receiving a message or information through the IMS network element is similar to transmitting the invite message through the IMS network element in S201, and the IMS network element is configured to transparently transmit the message or the information. This is not described one by one in the following embodiments.

It may be understood that, after a user dials an access code of a customer service (which may be understood as a phone number of a customer service system) by using the user call terminal, the user call terminal performs S201. For example, the customer service may be a customer service of a communication operator or a customer service of an internet operator (for example, a customer service corresponding to a banking service or a customer service corresponding to an insurance service). A type of the customer service is not limited in this application.

It should be noted that, a customer service call terminal in embodiments of this application is a call terminal corresponding to a customer service representative in the customer service system, and the customer service call terminal is a part of the customer service system. It may be understood that the user calls the customer service system by using the user call terminal, and after the customer service system answers, the media server on a customer service platform plays audio prompt content related to a service of the user to prompt the user to select a corresponding service according to an actual requirement. When the user selects a manual service, the media server in the customer service system continues to call the customer service call terminal. This is specifically understood with reference to related steps in the following embodiment.

In this embodiment of this application, the user call terminal sends the invite message according to the session initiation protocol (session initiation protocol, SIP), or it may be understood that the invite message is sent through a SIP message. The invite message carries session description protocol (session description protocol, SDP) information of the user call terminal, the SDP information includes address information, audio port information, and an audio encoding/decoding format of the user call terminal, and the SDP information is used for media resource negotiation with the media server, to establish a voice call media transmission channel for transmitting a call voice stream between the user call terminal and the media server. In this embodiment of this application, address information of a device may be an IP address of the device.

S202: The media server sends a ringing message to the user call terminal.

The ringing message indicates that a customer service phone dialed by the user is being connected. In this case, the user call terminal is in a ringing state of waiting for the customer service system to answer (that is, pick up). The ringing message may be an 18* series message, for example, a 181 message (that is, call being forwarded, used to indicate that the call is being forwarded) or a 183 message (used to indicate a progress of establishing a conversation). The ringing message carries SDP information of the media server, and an IP address, audio port information, and an audio encoding/decoding format of the media server. The SDP information is used to perform media resource negotiation with the user call terminal, to establish the voice call media transmission channel for transmitting a call voice stream between the user call terminal and the media server.

S203: The media server sends a response message to the user call terminal through the IMS network element.

It may be understood that after the media server sends the ringing message to the user call terminal, the user call terminal waits for an answer from the customer service system (that is, waits for a connection). In this process, the user may hear a waiting tone of "beep...beep...", or may hear a ring back tone. After the customer service system answers, the call is connected, and the media server performs S203.

Similarly, the IMS network element is configured to transparently transmit the response message.

In this embodiment of this application, after the customer service system answers the call of the user call terminal, the media server may play audio prompt content related to the service of the user. Specifically, the media server sends the audio prompt content to the user call terminal based on the established voice call media transmission channel, where the audio prompt content may prompt the user to select different service content according to a requirement. For example, if the voice call is a voice call in a scenario in which the user calls a communication operator, the audio prompt content may include:
Press "1" for bill and traffic query, press "2" for broadband service, press "3" for recharge service, press "4" for service query and handling, press "5" for password service, press "6" for enterprise service, press "0" for manual service, and so on. Optionally, the audio prompt content may further include some advertisements, publicity, and other content. The audio prompt content is related to a specific application scenario, and the audio prompt content is not limited in this application.

When the user performs an operation based on a prompt of the audio prompt content and selects the manual service, after the media server detects an operation of selecting the manual service, the media server allocates a customer service representative to the user (that is, selects a corresponding customer service call terminal for the user call terminal), and then the media server performs the following S204.

S204: The media server sends an invite (invite) message to the customer service call terminal.

The invite message is used to make a voice call between the customer service call terminal and the user call terminal, the invite message includes the SDP information of the media server, and the SDP information of the media server includes the IP address, the audio port information, and the audio encoding/decoding format of the media server. The SDP information is used to perform media resource negotiation with the customer service call terminal, to establish a voice call media transmission channel for transmitting a call voice stream between the customer service call terminal and the media server.

S205: The customer service call terminal sends a response message to the media server.

After the customer service call terminal sends the response message, the customer service call terminal joins the call with the user call terminal, where the response message includes SDP information of the customer service call terminal, and the SDP information of the customer service call terminal includes an IP address, audio port information, and an audio encoding/decoding format of the customer service call terminal. The SDP information is used to perform media resource negotiation with the media server, to establish the voice call media transmission channel for transmitting a call voice stream between the customer service call terminal and the media server.

It may be understood that, because the customer service call terminal is a new device in the customer service system for communicating with the user call terminal, in a subsequent process, to implement communication between the user call terminal and the customer service call terminal, media resource negotiation needs to be performed again, that is, the media server performs media resource renegotiation with the user call terminal (refer to S206 and S207), and the media server performs media resource renegotiation with the customer service call terminal (refer to S208 and S209). A voice stream transmission channel (that is, a voice call media transmission channel) may be established through media resource renegotiation. It should be noted that the voice call media transmission channel established by using S206 to S209 is a transmission channel that requires the media server as a medium, that is, an indirect voice call media transmission channel. The voice call media transmission channel includes the voice call media transmission channel between the user call terminal and the media server, and the voice call media transmission channel between the media server and the customer service call terminal.

S206: The media server sends a reinvite (reinvite) message to the user call terminal through the IMS network element.

The reinvite message is used to perform media resource renegotiation with the user call terminal, to establish the voice call media transmission channel between the user call terminal and the media server, where the reinvite message includes the SDP information of the media server, and the SDP information of the media server includes the IP address, the audio port information, and the audio encoding/decoding format of the media server.

S207: The user call terminal sends a response message to the media server through the IMS network element.

The response message includes SDP information of the user call terminal, and the SDP information of the user call terminal includes an IP address, audio port information, and an audio encoding/decoding format of the user call terminal.

Through the media resource negotiation process described in S206 and S207, the user call terminal may obtain the SDP information of the media server, and the media server may also obtain the SDP information of the user call terminal. In this way, the voice call media transmission channel between the user call terminal and the media server is established.

S208: The media server sends a reinvite (reinvite) message to the customer service call terminal.

The reinvite message is used to perform media resource renegotiation with the customer service call terminal, to establish the voice call media transmission channel between the customer service call terminal and the media server, where the reinvite message includes the SDP information of the media server, and the SDP information of the media server includes the IP address, the audio port information, and the audio encoding/decoding format of the media server.

S209: The customer service call terminal sends a response message to the media server.

The response message includes the SDP information of the customer service call terminal, and the SDP information of the customer service call terminal includes the IP address, the audio port information, and the audio encoding/decoding format of the customer service call terminal.

Through the media resource negotiation process described in S208 and S209, the customer service call terminal may obtain the SDP information of the media server, and the media server may also obtain the SDP information of the customer service call terminal. In this way, the voice call media transmission channel between the customer service call terminal and the media server is established.

It may be understood that, through the voice call media transmission channel (including the voice call media transmission channel between the user call terminal and the media server, and the voice call media transmission channel between the customer service call terminal and the media server) established in S206 to S209, the voice call media transmission channel is used to transmit a call voice stream between the customer service call terminal and the user call terminal. For example, based on the established voice call media transmission channel, when the user call terminal sends the call voice stream to the customer service call terminal, the user call terminal sends the call voice stream to the media server based on the voice call media transmission channel between the user call terminal and the media server, and then the media server sends the received call voice stream to the customer service call terminal based on the voice call media transmission channel between the media server and the customer service call terminal.

Optionally, in some cases, a voice call media transmission channel that is directly used to transmit a call voice stream between the user call terminal and the customer service call terminal may alternatively be established through media resource negotiation. It should be noted that the voice call media transmission channel that is directly used to transmit a call voice stream between the user call terminal and the customer service call terminal is a channel that does not require the media server as a transit device, and is not necessarily a direct channel between the user call terminal and the customer service call terminal. In this case, S206 to S209 may be replaced with S206' to S210'.

S206': The media server sends a reinvite (reinvite) message to the user call terminal through the IMS network element.

The reinvite message is used to perform media resource renegotiation with the user call terminal, the reinvite message includes the SDP information of the media server, and the SDP information of the media server includes the IP address, the audio port information, and the audio encoding/decoding format of the media server.

S207': The user call terminal sends a response message to the media server through the IMS network element.

The response message includes SDP information of the user call terminal, and the SDP information of the user call terminal includes an IP address, audio port information, and an audio encoding/decoding format of the user call terminal.

S208': The media server sends a reinvite (reinvite) message to the customer service call terminal.

The reinvite message is used to perform media resource renegotiation with the customer service call terminal, the reinvite message includes the SDP information of the user call terminal, and the SDP information of the user call terminal includes the IP address, the audio port information, and the audio encoding/decoding format of the user call terminal.

S209': The customer service call terminal sends a response message to the media server.

The response message includes the SDP information of the customer service call terminal, and the SDP information of the customer service call terminal includes the IP address, the audio port information, and the audio encoding/decoding format of the customer service call terminal.

S210': The media server sends a response message carrying the SDP information of the customer service call terminal to the user call terminal.

Through the media resource negotiation process from S206' to S210', the user call terminal may obtain the SDP information of the customer service call terminal, and the customer service call terminal may obtain the SDP information of the user call terminal, that is, the voice call media transmission channel between the user call terminal and the customer service call terminal is established. Based on the established voice call media transmission channel, the user call terminal and the customer service call terminal may directly communicate with each other, and the media server does not need to forward a call voice stream. For example, the user call terminal may directly send a call voice stream to the customer service call terminal based on the voice call media transmission channel between the user call terminal and the media server. Similarly, the customer service call terminal may directly send a call voice stream to the user call terminal based on the voice call media transmission channel.

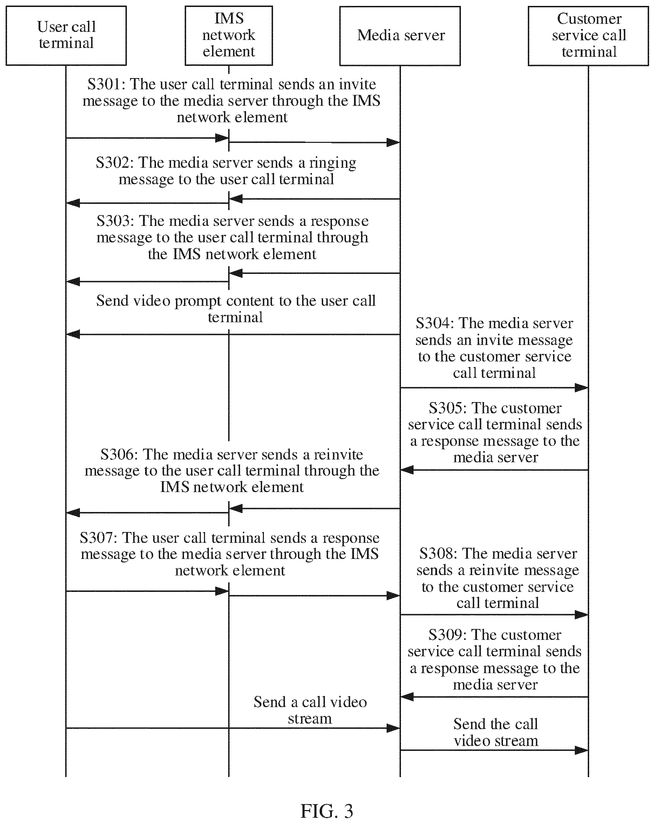

With reference to the architecture of the communication system shown in FIG. 1, a video call process is described by using a video call as an example on the basis that a user call terminal accesses an access network, a 4G core network or a 5G core network, and an IMS core network, to facilitate understanding of the video call process in a customer service scenario. The video call process is similar to the foregoing voice call process. For related content in the video call process, refer to the descriptions in the voice call process. Refer to FIG. 3. The video call process includes the following steps.

S301: The user call terminal sends an invite (invite) message to a media server through an IMS network element.

The invite message carries SDP information of the user call terminal, the SDP information includes an IP address, audio port information, an audio encoding/decoding format, video port information, and a video encoding/decoding format of the user call terminal, and the SDP information is used to perform media resource negotiation with the media server, to establish a voice call media transmission channel for transmitting a call voice stream and a video call media transmission channel for transmitting a call video stream between the user call terminal and the media server. It may be understood that, the video call process relates to transmission of the call voice stream and the call video stream. Therefore, compared with that in an audio call process, SDP information in the video call process further needs to include video port information and a video encoding/decoding format.

S302: The media server sends a ringing message to the user call terminal.

The ringing message carries SDP information of the media server, and an IP address, audio port information, an audio encoding/decoding format, video port information, and a video encoding/decoding format of the media server. The SDP information is used to perform media resource negotiation with the user call terminal, to establish the voice call media transmission channel for transmitting a call voice stream and the video call media transmission channel for transmitting a call video stream between the user call terminal and the media server.

S303: The media server sends a response message to the user call terminal through the IMS network element.

In this embodiment of this application, if a user initiates a video call, after a customer service system answers the call of the user call terminal, the media server may play video prompt content related to a service of the user. Specifically, the media server sends the video prompt content to the user call terminal based on the established voice call media transmission channel and video call media transmission channel, where the video prompt content may prompt the user to select different service content according to a requirement.

When the user performs an operation based on a prompt of the video prompt content and selects a manual service, after the media server detects an operation of selecting the manual service, the media server allocates a customer service representative to the user (that is, selects a corresponding customer service call terminal for the user call terminal), and then the media server performs the following S304.

S304: The media server sends an invite (invite) message to the customer service call terminal.

The invite message is used to make a video call between the customer service call terminal and the user call terminal, the invite message includes the SDP information of the media server, and the SDP information of the media server includes the IP address, the audio port information, the audio encoding/decoding format, the video port information, and the video encoding/decoding format of the media server. The SDP information is used to perform media resource negotiation with the customer service call terminal, to establish a voice call media transmission channel for transmitting a call voice stream and a video call media transmission channel for transmitting a call video stream between the customer service call terminal and the media server.

S305: The customer service call terminal sends a response message to the media server.

After the customer service call terminal sends the response message, the customer service call terminal joins the video call with the user call terminal, where the response message includes SDP information of the customer service call terminal, and the SDP information of the customer service call terminal includes an IP address, audio port information, an audio encoding/decoding format, video port information, and a video encoding/decoding format of the customer service call terminal. The SDP information is used to perform media resource negotiation with the media server, to establish the voice call media transmission channel for transmitting a call voice stream and the video call media transmission channel for transmitting a call video stream between the customer service call terminal and the media server.

It may be understood that, because the customer service call terminal is a new device in the customer service system for communicating with the user call terminal, in a subsequent process, to implement communication between the user call terminal and the customer service call terminal, media resource negotiation needs to be performed again, that is, the media server performs media resource renegotiation with the user call terminal (refer to S306 and S307), and the media server performs media resource renegotiation with the customer service call terminal (refer to S308 and S309). The voice call media transmission channel and the video call media transmission channel can be established through media resource renegotiation. It should be noted that the voice call media transmission channel and the video call media transmission channel established by using S306 to S309 are transmission channels that require the media server as a medium, that is, an indirect voice call media transmission channel and an indirect video call media transmission channel. The voice call media transmission channel includes the voice call media transmission channel between the user call terminal and the media server, and the voice call media transmission channel between the media server and the customer service call terminal, and the video call media transmission channel includes the video call media transmission channel between the user call terminal and the media server, and the video call media transmission channel between the media server and the customer service call terminal.

S306: The media server sends a reinvite (reinvite) message to the user call terminal through the IMS network element.

The reinvite message is used to perform media resource renegotiation with the user call terminal, to establish the voice call media transmission channel between the user call terminal and the media server, and the video call media transmission channel between the user call terminal and the media server. The reinvite message includes the SDP information of the media server, and the SDP information of the media server includes the IP address, the audio port information, the audio encoding/decoding format, the video port information, and the video encoding/decoding format of the media server.

S307: The user call terminal sends a response message to the media server through the IMS network element.

The response message includes the SDP information of the user call terminal, and the SDP information of the user call terminal includes the IP address, the audio port information, the audio encoding/decoding format, the video port information, and the video encoding/decoding format of the user call terminal.

Through the media resource negotiation process described in S306 and S307, the user call terminal may obtain the SDP information of the media server, and the media server may also obtain the SDP information of the user call terminal. In this way, the voice call media transmission channel between the user call terminal and the media server, and the video call media transmission channel between the user call terminal and the media server are established.

S308: The media server sends a reinvite (reinvite) message to the customer service call terminal.

The reinvite message is used to perform media resource renegotiation with the customer service call terminal, to establish the voice call media transmission channel between the customer service call terminal and the media server, and the video call media transmission channel between the customer service call terminal and the media server. The reinvite message includes the SDP information of the media server, and the SDP information of the media server includes the IP address, the audio port information, the audio encoding/decoding format, the video port information, and the video encoding/decoding format of the media server.

S309: The customer service call terminal sends a response message to the media server.

The response message includes the SDP information of the customer service call terminal, and the SDP information of the customer service call terminal includes the IP address, the audio port information, the audio encoding/decoding format, the video port information, and the video encoding/decoding format of the customer service call terminal.

Through the media resource negotiation process described in S308 and S309, the customer service call terminal may obtain the SDP information of the media server, and the media server may also obtain the SDP information of the customer service call terminal. In this way, the voice call media transmission channel between the customer service call terminal and the media server, and the video call media transmission channel between the customer service call terminal and the media server are established.

It may be understood that, through the voice call media transmission channel (including the voice call media transmission channel between the user call terminal and the media server, and the voice call media transmission channel between the customer service call terminal and the media server) established in S306 to S309, the voice call media transmission channel is used to transmit a call voice stream between the customer service call terminal and the user call terminal. Through the video call media transmission channel (including the video call media transmission channel between the user call terminal and the media server, and the video call media transmission channel between the customer service call terminal and the media server) established in S306 to S309, the video call media transmission channel is used to transmit a call video stream between the customer service call terminal and the user call terminal.

Similar to that in the voice call process, optionally, in some cases, a voice call media transmission channel that is directly used to transmit a call voice stream and a video call media transmission channel that is directly used to transmit a call video stream between the user call terminal and the customer service call terminal may alternatively be established through media resource negotiation. In this case, S306 to S309 may be replaced with S306' to S310'.

S306': The media server sends a reinvite (reinvite) message to the user call terminal through the IMS network element.

The reinvite message is used to perform media resource renegotiation with the user call terminal, the reinvite message includes the SDP information of the media server, and the SDP information of the media server includes the IP address, the audio port information, the audio encoding/decoding format, the video port information, and the video encoding/decoding format of the media server.

S307': The user call terminal sends a response message to the media server through the IMS network element.

The response message includes the SDP information of the user call terminal, and the SDP information of the user call terminal includes the IP address, the audio port information, the audio encoding/decoding format, the video port information, and the video encoding/decoding format of the user call terminal.

S308': The media server sends a reinvite (reinvite) message to the customer service call terminal.

The reinvite message is used to perform media resource renegotiation with the customer service call terminal, the reinvite message includes the SDP information of the user call terminal, and the SDP information of the user call terminal includes the IP address, the audio port information, the audio encoding/decoding format, the video port information, and the video encoding/decoding format of the user call terminal.

S309': The customer service call terminal sends a response message to the media server.

The response message includes the SDP information of the customer service call terminal, and the SDP information of the customer service call terminal includes the IP address, the audio port information, the audio encoding/decoding format, the video port information, and the video encoding/decoding format of the customer service call terminal.

S310': The media server sends a response message carrying the SDP information of the customer service call terminal to the user call terminal.

In conclusion, different from that in the voice call process, all SDP information in the media negotiation process includes video port information and a video encoding/decoding format of a device.

Through the media resource negotiation process from S306' to S310', the user call terminal may obtain the SDP information of the customer service call terminal, and the customer service call terminal may obtain the SDP information of the user call terminal, that is, the direct voice call media transmission channel and the direct video call media transmission channel between the user call terminal and the customer service call terminal are established. Based on the established direct voice call media transmission channel and direct video call media transmission channel, the media server does not need to forward a call voice stream and a call video stream when the user call terminal communicates with the customer service call terminal.

Optionally, the user call terminal is a call terminal, and the customer service call terminal is a peer call terminal; or the customer service call terminal is a call terminal, and the user call terminal is a peer call terminal. This is specifically determined based on an actual situation, and is not limited in this embodiment of this application.

In embodiments of this application, the foregoing call terminal (the call terminal and the peer call terminal) may be an electronic device such as a mobile phone, a tablet computer, or a personal computer (Ultra-mobile Personal Computer, UMPC). Alternatively, the foregoing call terminal may be another electronic device such as a desktop device, a laptop device, a handheld device, a wearable device, a smart home device, or an in-vehicle device, for example, a netbook, a smartwatch, a smart camera, a netbook, or a personal digital assistant (Personal Digital Assistant, PDA). A specific type, a structure, and the like of the call terminal are not limited in embodiments of this application.

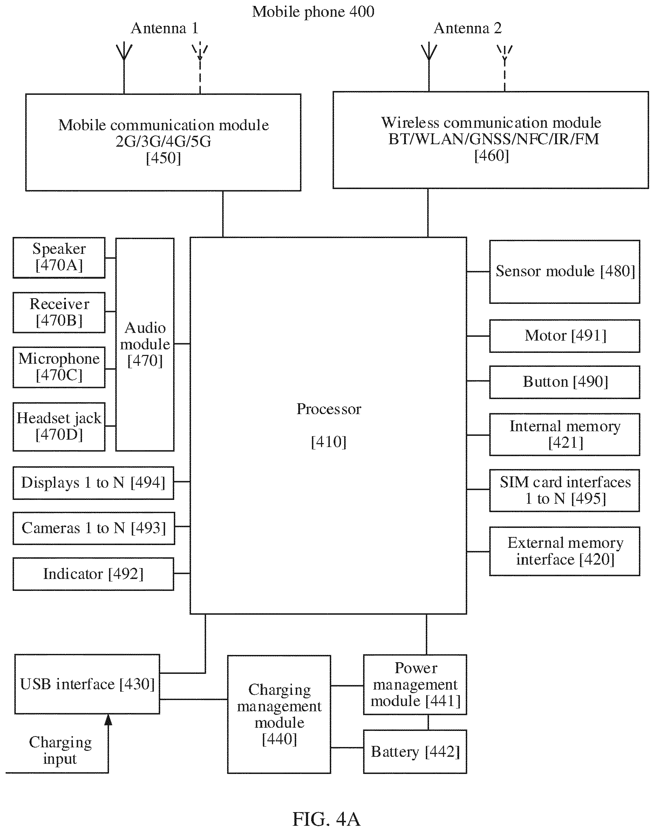

For example, the call terminal is a mobile phone. FIG. 4A is a schematic diagram of a hardware structure of a mobile phone 400 according to an embodiment of this application. The mobile phone 400 includes a processor 410, an external memory interface 420, an internal memory 421, a universal serial bus (universal serial bus, USB) interface 430, a charging management module 440, a power management module 441, a battery 442, an antenna 1, an antenna 2, a mobile communication module 450, a wireless communication module 460, an audio module 470, a speaker 470A, a receiver 470B, a microphone 470C, a headset jack 470D, a sensor module 480, a button 490, a motor 491, an indicator 492, a camera 493, a display 494, a subscriber identification module (subscriber identification module, SIM) card interface 495, and the like.

It may be understood that the structure shown in this embodiment of this application does not constitute a specific limitation on the mobile phone 400. In some other embodiments of this application, the mobile phone 400 may include more or fewer components than those shown in the figure, or combine some components, or split some components, or have different component arrangements. The components shown in the figure may be implemented by hardware, software, or a combination of software and hardware.

The processor 410 may include one or more processing units. For example, the processor 410 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 400. The controller may generate an operation control signal based on instruction operation code and a time sequence signal, to complete control of instruction fetching and instruction execution.

A memory may be further disposed in the processor 410, to store instructions and data. In some embodiments, the memory in the processor 410 is a cache. The memory may store instructions or data just used or cyclically used by the processor 410. If the processor 410 needs to use the instructions or data again, the instructions or data may be directly invoked from the memory. This avoids repeated access, and reduces waiting time of the processor 410, so that system efficiency is improved.

The charging management module 440 is configured to receive charging input from a charger. When charging the battery 442, the charging management module 440 may further supply power to the electronic device through the power management module 441.

The power management module 441 is configured to connect the battery 442, the charging management module 440, and the processor 410. The power management module 441 receives input from the battery 442 and/or the charging management module 440, and supplies power to the processor 410, the internal memory 421, the external memory, the display 494, the camera 493, the wireless communication module 460, and the like. The power management module 441 may be further configured to monitor parameters such as a battery capacity, a battery cycle count, and a battery health status (leakage or impedance). In some other embodiments, the power management module 441 may alternatively be disposed in the processor 410. In some other embodiments, the power management module 441 and the charging management module 440 may alternatively be disposed in a same component.

A wireless communication function of the mobile phone 400 may be implemented by using the antenna 1, the antenna 2, the mobile communication module 450, the wireless communication module 460, the modem processor, the baseband processor, and the like.

The antenna 1 and the antenna 2 are configured to transmit and receive electromagnetic wave signals.

The mobile communication module 450 may provide a solution for wireless communication, including 2G/3G/4G/5G and the like, that is applied to the mobile phone 400. The mobile communication module 450 may receive an electromagnetic wave by using the antenna 1, perform processing such as filtering and amplification on the received electromagnetic wave, and send a processed electromagnetic wave to the modem processor for demodulation. The mobile communication module 450 may further amplify a signal modulated by the modem processor, and convert the signal into an electromagnetic wave for radiation through the antenna 1. In some embodiments, at least some function modules of the mobile communication module 450 may be disposed in the processor 410. In some embodiments, at least some function modules of the mobile communication module 450 may be disposed in a same component as at least some modules of the processor 410.

The wireless communication module 460 may provide a solution for wireless communication that is applied to the mobile phone 400 and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 460 may be one or more components that integrate at least one communication processing module. The wireless communication module 460 receives an electromagnetic wave through the antenna 2, performs frequency modulation and filtering on an electromagnetic wave signal, and sends a processed signal to the processor 410. The wireless communication module 460 may further receive a to-be-sent signal from the processor 410, perform frequency modulation and amplification on the to-be-sent signal, and convert the to-be-sent signal into an electromagnetic wave for radiation through the antenna 2.

In some embodiments, in the mobile phone 400, the antenna 1 is coupled to the mobile communication module 450, and the antenna 2 is coupled to the wireless communication module 460, so that the mobile phone 400 can communicate with a network and another device according to a wireless communication technology.

The mobile phone 400 implements a display function by using the GPU, the display 494, the application processor, and the like. The GPU is a microprocessor for image processing, and is connected to the display 494 and the application processor. The GPU is configured to perform mathematical and geometric calculation and render graphics. The processor 410 may include one or more GPUs that execute program instructions to generate or change display information.

The display 494 is configured to display an image, a video, and the like. The display 494 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the mobile phone 400 may include one or N displays 494, where N is a positive integer greater than 1.

The mobile phone 400 may implement a photographing function by using the ISP, the camera 493, the video codec, the GPU, the display 494, the application processor, and the like.

The ISP is configured to process data fed back by the camera 493, and the camera 493 is configured to capture a static image or a video.

The digital signal processor is configured to process a digital signal, and may process another digital signal (for example, an audio signal) in addition to a digital image signal.

The video codec is configured to compress or decompress a digital video. The mobile phone 400 may support one or more types of video codecs. In this way, the mobile phone 400 may play or record videos in a plurality of coding formats, for example, moving picture experts group (moving picture experts group, MPEG)-1, MPEG-2, MPEG-3, and MPEG-4.

The external memory interface 420 may be configured to connect to an external memory card such as a micro SD card, to extend a storage capability of the mobile phone 400. The external memory card communicates with the processor 410 by using the external memory interface 420, to implement a data storage function. For example, files such as music or videos are stored in the external memory card.

The internal memory 421 may be configured to store computer executable program code, where the executable program code includes instructions. The processor 410 performs various function applications and data processing of the mobile phone 400 by running the instructions stored in the internal memory 421. The internal memory 421 may include a program storage area and a data storage area. The program storage area may store an operating system, an application program required by at least one function (for example, a sound play function or an image play function), and the like. The data storage area may store data (such as audio data or a phone book) created in a use process of the mobile phone 400. In addition, the internal memory 421 may include a high-speed random access memory, and may further include a non-volatile memory, such as at least one magnetic disk storage component, a flash memory component, and a universal flash storage (universal flash storage, UFS).

The mobile phone 400 may implement an audio function, for example, music playing and recording, by using the audio module 470, the speaker 470A, the receiver 470B, the microphone 470C, the headset jack 470D, the application processor, and the like.

The audio module 470 is configured to convert digital audio information into an analog audio signal for output, and is also configured to convert analog audio input into a digital audio signal. The audio module 470 may be further configured to encode and decode audio signals. In some embodiments, the audio module 470 may be disposed in the processor 410, or some function modules of the audio module 470 may be disposed in the processor 410.

The speaker 470A, also referred to as a "loudspeaker", is configured to convert an audio electrical signal into a sound signal. The mobile phone 400 may be used to listen to music or answer a call in a hands-free mode over the speaker 470A.

The receiver 470B, also referred to as an "earpiece", is configured to convert an audio electrical signal into a sound signal. When a call is answered or a voice message is listened to by using the mobile phone 400, the receiver 470B may be put close to a human ear to listen to a voice.

The microphone 470C, also referred to as a "mike" or a "mic", is configured to convert a sound signal into an electrical signal. When making a call or sending a voice message, the user may make a sound near the microphone 470C through the mouth, to enter a sound signal to the microphone 470C. At least one microphone 470C may be disposed on the mobile phone 400. In some other embodiments, two microphones 470C may be disposed on the mobile phone 400. In addition to sound signal collection, a noise reduction function may be further implemented. In some other embodiments, three, four, or more microphones 470C may be alternatively disposed on the mobile phone 400, to collect a sound signal, implement noise reduction, recognize a sound source, implement a directional recording function, and the like.

The headset jack 470D is configured to connect to a wired headset.

The button 490 includes a power button, a volume button, and the like. The mobile phone 400 may receive button input, and generate button signal input related to user settings and function control of the mobile phone 400.

The motor 491 may generate a vibration prompt. The motor 491 may be used for an incoming call vibration prompt, or may be used for touch vibration feedback.

The indicator 492 may be an indicator light, and may be used to indicate a charging status or a power change, or may be used to indicate a message, a missed call, a notification, or the like.

The SIM card interface 495 is configured to connect to a SIM card. The SIM card may be inserted into the SIM card interface 495 or removed from the SIM card interface 495, to implement contact with or separation from the mobile phone 400.

It may be understood that in this embodiment of this application, the mobile phone 400 may perform some or all of the steps in embodiments of this application. These steps or operations are merely examples. The mobile phone 400 may further perform other operations or variations of various operations. In addition, the steps may be performed in a sequence different from a sequence presented in embodiments of this application, and not all the operations in embodiments of this application may be performed. Embodiments of this application may be separately implemented, or may be implemented in any combination. This is not limited in this application.

The communication method provided in embodiments of this application may be applied to a call terminal having the hardware structure shown in FIG. 4A or a call terminal having a similar structure. Alternatively, the method may be applied to a call terminal of another structure. This is not limited in embodiments of this application.

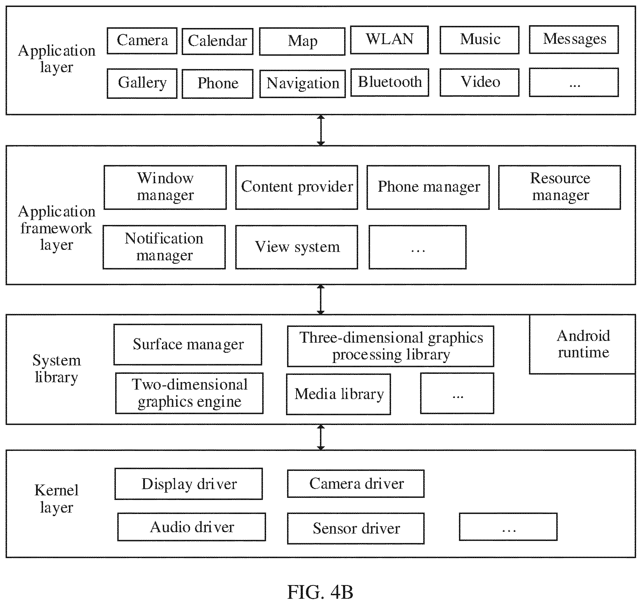

After the hardware structure of the call terminal is described, in this application, an example in which the call terminal is the mobile phone 400 is used herein to describe a system architecture of the call terminal provided in this application. The system architecture of the mobile phone 400 may use a layered architecture, an event-driven architecture, a microkernel architecture, a micro-service architecture, or a cloud architecture. In embodiments of this application, an Android^{®} system with a layered architecture is used as an example to describe a software structure of the mobile phone 400. FIG. 4B is a block diagram of a software structure of a call terminal according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 4B, the application packages may include applications such as Camera, Gallery, Calendar, Phone, Map, Navigation, WLAN, Bluetooth, Music, Video, and Messages.

In embodiments of this application, a call application (that is, a call app) at the application layer of the mobile phone 400 may be used to perform a voice call or a video call with another call terminal. The call application is an application that is already provided before delivery of the mobile phone 400, and does not need to be installed or configured by a user.

It may be understood that, in the communication method provided in embodiments of this application, a function of performing, by a call terminal and a peer call terminal, a mark operation on a target object in a video picture in a voice call process or a video call process is implemented based on call applications on the call terminal and the peer call terminal. It may also be considered that the call terminal and the peer call terminal in embodiments of this application are specifically the call applications on the call terminal and the peer call terminal.

The application framework layer provides an application programming interface (application programming interface, API) and a programming framework for applications at the application layer. The application framework layer includes some predefined functions.

As shown in FIG. 4B, the application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like. The content provider is configured to store and obtain data and make the data accessible to the application. The data may include videos, images, audio, calls that are made and received, browsing history and bookmarks, a phone book, and the like. The view system includes visual controls, such as a text display control and a picture display control. The view system may be configured to construct an application. A display interface may include one or more views. For example, a display interface including an SMS notification icon may include a text display view and a picture display view. The phone manager is configured to provide a communication function of the call terminal, for example, call status management (including accept and decline). The resource manager provides various resources for the application, such as a localized string, an icon, a picture, a layout file, and a video file. The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, a prompt tone is made, the electronic device vibrates, and an indicator flickers.

The Android runtime includes a kernel library and a virtual machine. The Android runtime is responsible for scheduling and management of the Android system.

The kernel library includes two parts: a function that needs to be invoked by using the Java language, and a kernel library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of function modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications. The media library supports playback and recording in a plurality of commonly used audio and video formats, and static image files. The media library may support a plurality of audio and video coding formats, such as MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the mobile phone 400 with reference to a photographing scenario.

When a touch sensor of the mobile phone 400 receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap touch operation, and a control corresponding to the single-tap operation is a control of a camera application icon. The camera application invokes an interface of the application framework layer to enable a camera application, then enables a camera driver by invoking the kernel layer, and captures a static image or a video through the camera 493.

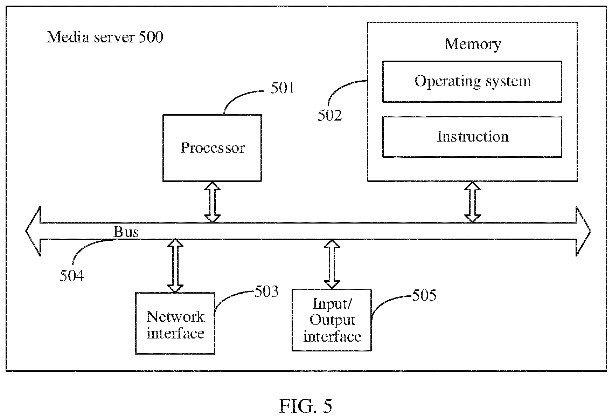

In embodiments of this application, the media server in the foregoing communication system may be a server in a hardware form, or may be a server in a software form. The server in a hardware form is used as an example. As shown in FIG. 5, an embodiment of this application provides a media server 500. The media server 500 includes at least one processor 501 and a memory 502.

The processor 501 includes one or more central processing units (central processing unit, CPU). The CPU is a single-CPU (single-CPU) or a multi-CPU (multi-CPU).

The memory 502 includes but is not limited to a random access memory (random access memory, RAM), a read-only memory (read-only memory, ROM), an erasable programmable read-only memory (erasable programmable read-only memory, EPROM), a flash memory, an optical memory, or the like. The memory 502 stores code of an operating system.

Optionally, the processor 501 implements the method in the foregoing embodiments by reading instructions stored in the memory 502, or the processor 501 implements the method in the foregoing embodiments by using internally stored instructions. When the processor 501 implements the method in the foregoing embodiments by reading the instructions stored in the memory 502, the memory 502 stores instructions for implementing the communication method provided in embodiments of this application.

After the program code stored in the memory 502 is read by the at least one processor 501, the media server 500 performs the following operations: establishing a first video call media transmission channel and a second video call media transmission channel, and transmitting a call video stream between a call terminal and a peer call terminal through the first video call media transmission channel and the second video call media transmission channel, to implement a video call service between the call terminal and the peer call terminal; receiving a video picture marking request from the call terminal; and receiving first marking media data from the call terminal through the first video call media transmission channel, and transmitting second marking media data to the peer call terminal through the second video call media transmission channel, where both the first marking media data and the second marking media data are used to present a second video picture on a call screen of the peer call terminal.

Optionally, the media server 500 shown in FIG. 5 further includes a network interface 503. The network interface 503 is a wired interface, for example, a fiber distributed data interface (fiber distributed data interface, FDDI) or a gigabit Ethernet (gigabit ethernet, GE) interface. Alternatively, the network interface 503 is a wireless interface. The network interface 503 is configured to receive a message (for example, a SIP message). Alternatively, the network interface 503 is configured to receive a call video stream or a call voice stream.

The memory 502 is configured to store an audio stream or a video stream received by the network interface 503, and the at least one processor 501 further performs, based on the information stored in the memory 502, the method described in the foregoing method embodiments. For more details of implementing the foregoing functions by the processor 501, refer to the descriptions in the foregoing method embodiments. Details are not described herein again.

Optionally, the media server 500 further includes a bus 504. The processor 501 and the memory 502 are usually connected to each other by using the bus 504, or are connected to each other in another manner.

Optionally, the media server 500 further includes an input/output interface 505. The input/output interface 505 is configured to connect to an input device, and receive instructions entered by a user through the input device. The input device includes, but is not limited to, a keyboard, a touchscreen, a microphone, and the like. The input/output interface 505 is further configured to connect to an output device, and output a processing result of the processor 501. The output device includes, but is not limited to, a display, a printer, and the like.

With reference to related descriptions of the foregoing embodiments, an embodiment of this application provides a communication method. The method may be applied to a call terminal (including a call terminal and a peer call terminal of the call terminal) that has the hardware structure shown in FIG. 4A and the system architecture shown in FIG. 4B and a media server that has the hardware structure shown in FIG. 5 in a communication system, and the communication method is implemented through interaction between devices.

It should be noted that in embodiments of this application, there is one call terminal, and there is at least one peer call terminal. In a service scenario of a manual customer service, a device initiating a call is a user call terminal, and a called device is a customer service call terminal. During a call between one user call terminal and one customer service call terminal, one or more third-party call terminals may be invited to join the call. The customer service call terminal may perform a mark operation on a target object in a video picture, and transmit the video picture and generated marking trace data to the user call terminal. In this case, the customer service call terminal is a call terminal, and the user call terminal is a peer call terminal.

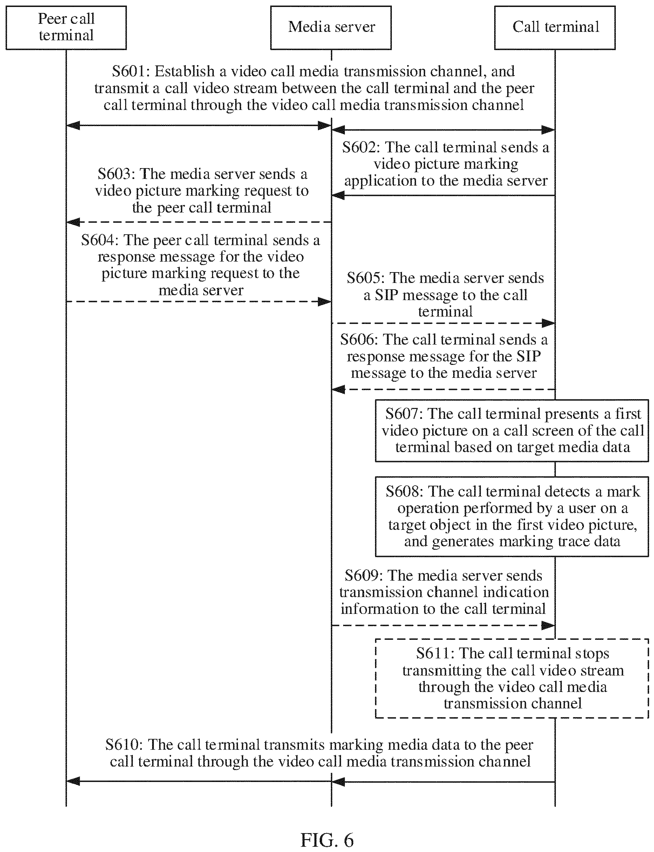

According to the content of the foregoing embodiments, it can be learned that, in a customer service scenario, in a manual service phase, that is, during a call between a customer service representative and a user (that is, a customer service call terminal held by the customer service representative and a user call terminal held by the user), the customer service representative or the user may perform a mark operation on a target object in a video picture. The following describes in detail the communication method provided in embodiments of this application. As shown in FIG. 6, the communication method provided in embodiments of this application includes the following steps.

S601: Establish a video call media transmission channel, and transmit a call video stream between a call terminal and a peer call terminal through the video call media transmission channel, to implement a video call service between the call terminal and the peer call terminal.

In this embodiment of this application, the video call media transmission channel is established through interaction between the call terminal, a media server, and the peer call terminal. The video call media transmission channel is used to transmit the call video stream between the call terminal and the peer call terminal in the video call service, and the call video stream includes video content captured by the call terminal or the peer call terminal. It may be understood that, in this embodiment of this application, the call terminal and the peer call terminal are relative concepts. In two terminals participating in a call, either terminal may be a call terminal, and the other terminal is a peer call terminal.

Optionally, the video call media transmission channel established with participation of the call terminal, the peer call terminal, and the media server may be an indirect video call media transmission channel, and the establishing a video call media transmission channel specifically includes: establishing a first video call media transmission channel, and establishing a second video call media transmission channel, where the first video call media transmission channel is a video call media transmission channel between the call terminal and the media server, and the second video call media transmission channel is a video call media transmission channel between a customer service call terminal and the media server. In this embodiment of this application, for a process of establishing the video call media transmission channel, refer to the descriptions of S206 to S209 in the foregoing embodiments. Details are not described herein again.

Optionally, the video call media transmission channel established with participation of the call terminal, the peer call terminal, and the media server may alternatively be a direct video call media transmission channel, and the video call media transmission channel includes a video call media transmission channel between the call terminal and the peer call terminal. For a specific process, refer to the descriptions of S206' to S210' in the foregoing embodiments.

S602: The call terminal sends a video picture marking application to the media server. Correspondingly, the media server receives the video picture marking application from the call terminal.

The video picture marking application includes an identifier of the peer call terminal, and the identifier is used to apply for a mark operation on a video picture (referred to as a first video picture in the following embodiments) corresponding to the peer call terminal. It may be understood that there may be a plurality of peer call terminals that communicate with the call terminal, and in a process of communicating with the plurality of peer call terminals, the call terminal may apply for transmitting, to a specific peer call terminal, marking media data generated by performing a mark operation on a target object in the first video picture.

The video picture corresponding to the peer call terminal may be video content captured by the peer call terminal, or the video picture corresponding to the peer call terminal may be video content stored in a storage apparatus of the call terminal, and the video content is video content that is selected by the call terminal and that is to be sent to the peer call terminal.

Optionally, if a calling party (that is, the call terminal) initiates a video call, after the call terminal selects a manual service based on video prompt content, the media server in a customer service system calls the peer call terminal, and after the peer call terminal answers, the call terminal, the peer call terminal, and the media server interact to establish the video call media transmission channel. In this case, S601 is first performed, and then S602 is performed.

Optionally, if a calling party initiates a voice call, after the call terminal selects a manual service based on audio prompt content, the media server in a customer service system calls the peer call terminal, after the peer call terminal answers, the call terminal, the peer call terminal, and the media server interact to establish a voice call media transmission channel, and after the media server receives the video picture marking application, the call terminal, the peer call terminal, and the media server interact to establish the video call media transmission channel. In this case, S602 is first performed, and then S601 is performed.

S603: The media server sends a video picture marking request to the peer call terminal. Correspondingly, the peer call terminal receives the video picture marking request from the media server.

The video picture marking request is used to request to perform a mark operation on the first video picture.

S604: The peer call terminal sends a response message for the video picture marking request to the media server. Correspondingly, the media server receives the response message for the video picture marking request from the peer call terminal.

The response message indicates that the peer call terminal agrees the mark operation on the first video picture.

Optionally, if a calling party initiates a voice call, the video picture marking request further indicates that the voice call is requested to be converted into a video call, and the response message for the video picture marking request further indicates that the peer call terminal agrees conversion from the voice call to the video call.

Optionally, the first video picture is from video content received by the call terminal from the peer call terminal, and the response message for the video picture marking request further indicates that the peer call terminal allows the media server to capture the call video stream sent by the peer call terminal to the media server.

In this embodiment of this application, before the call terminal performs the mark operation on the target object in the video picture, the media server interacts with the call terminal to confirm that the call terminal has a resource for performing the mark operation on the first video picture (S605 and S606 below). After the call terminal sends the video picture marking request, a status of the call terminal may change. For example, a current network signal of the call terminal may be weak, or the call terminal is in a 2G/3G network and a bandwidth of the network is insufficient to support the call terminal in performing the mark operation, or the video call media transmission channel is unavailable, or the user corresponding to the call terminal is inconvenient to perform the mark operation. In these cases, the call terminal does not have the resource for performing the mark operation on the first video picture.

S605: The media server sends a SIP message to the call terminal. Correspondingly, the call terminal receives the SIP message from the media server.

The SIP message includes a mark operation confirmation identifier, and the mark operation confirmation identifier is used to confirm whether the call terminal has the resource for performing the mark operation on the first video picture.

S606: The call terminal sends a response message for the SIP message to the media server. Correspondingly, the media server receives the response message for the SIP message from the call terminal.

The response message includes a mark operation response identifier, and the mark operation response identifier indicates that the call terminal has the resource for performing the mark operation on the first video picture.

In this embodiment of this application, the mark operation confirmation identifier in the SIP message may be carried in a header field of the SIP message.

Optionally, the mark operation confirmation identifier may be carried in the header field of the SIP message in the following two manners.

In a first carrying manner, the mark operation confirmation identifier (denoted as Tag) is carried in a Contact extension field of the SIP message.

INVITE sip:02033296999@gd.ctcims.cn SIP/2.0 is used as an example.

A Contact header field is:
<sip:172.27.10.10:5060;transport=udp;zte-did=26-3-20481-3629-12-890-3302;zte-uid=200001+861892222222;Hpt=8e48_16;CxtId=4;TRC=ffffffff-ffffffff>;audio;video;Tag;+g.3gpp.mid-call;+g.3gpp.srvcc-alerting;+g.3gpp.ps2cs-srvcc-orig-pre-alerting;+g.3gpp.icsi-ref="urn%3Aurn-7%3A3gpp-service.ims.icsi.mmtel";
Max-Forwards: 64.

In a second carrying manner, the mark operation confirmation identifier (Tag) is carried in a Supported extension field of the SIP message:
Supported: 100rel,histinfo,precondition,timer,Tag.

Optionally, when a call initiated by a calling party is a voice call, the SIP message in S605 further includes SDP information of the media server, where the SDP information of the media server includes address information (for example, an IP address), audio port information, an audio encoding/decoding format, video port information, and a video encoding/decoding format of the media server.

When the SIP message includes the SDP information of the media server, the response message for the SIP message further includes SDP information of the call terminal, where the SDP information of the call terminal includes address information (for example, an IP address), audio port information, an audio encoding/decoding format, video port information, and a video encoding/decoding format of the call terminal.

In this embodiment of this application, when a call initiated by a calling party is a voice call, after the media server receives the video marking application sent by the call terminal, the media server and the call terminal may perform media resource negotiation based on the SDP information of the media server and the SDP information of the call terminal in the SIP message and the response message for the SIP message in S605 and S606, and establish the video call media transmission channel (that is, the first video call media transmission channel) between the call terminal and the media server. In this case, in a process in which the call terminal, the peer call terminal, and the media server interact to establish the video call media transmission channel in S602, a step of performing media resource negotiation between the media server and the call terminal may be replaced with steps S605 and S606.

Optionally, the media server and the peer call terminal interact (for example, the media server sends a SIP message to the peer call terminal, where the SIP message includes the SDP information of the media server; and the peer call terminal sends a response message for the SIP message to the media server, where the response message for the SIP message includes SDP information of the peer call terminal), to perform media resource negotiation and establish the video call media transmission channel (that is, the second video call media transmission channel) between the peer call terminal and the media server.

Optionally, when the SIP message includes the SDP information of the media server, the mark operation confirmation identifier may be carried in the SDP information of the media server.

When the SDP information carries a mark operation confirmation identifier (Tag), information about a video port for transmitting marking media data may be further indicated in an extended field of the SDP information. Specifically, it may indicate that a video port for transmitting the call video stream is used to transmit the marking media data. The following shows fields of the SDP information:

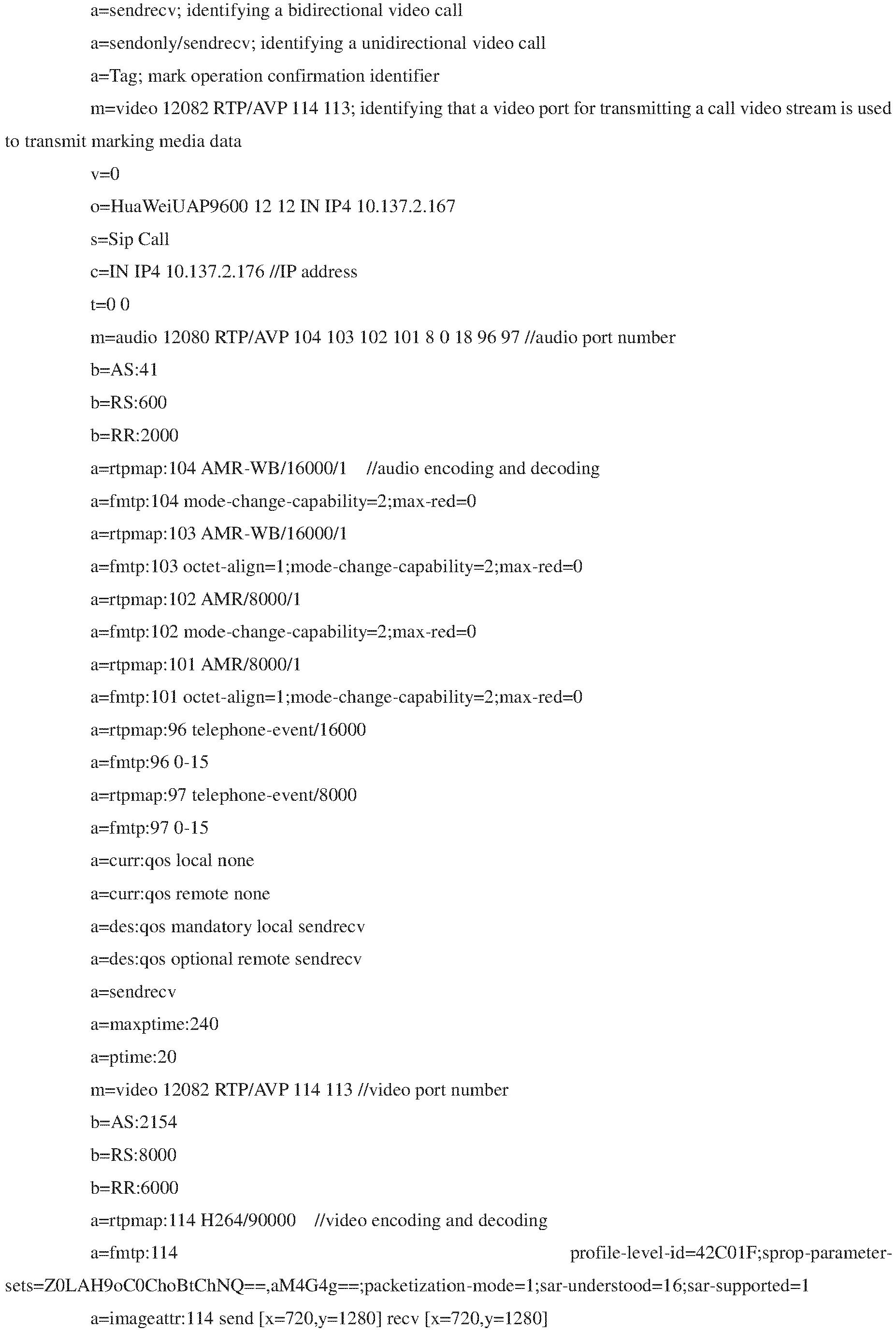

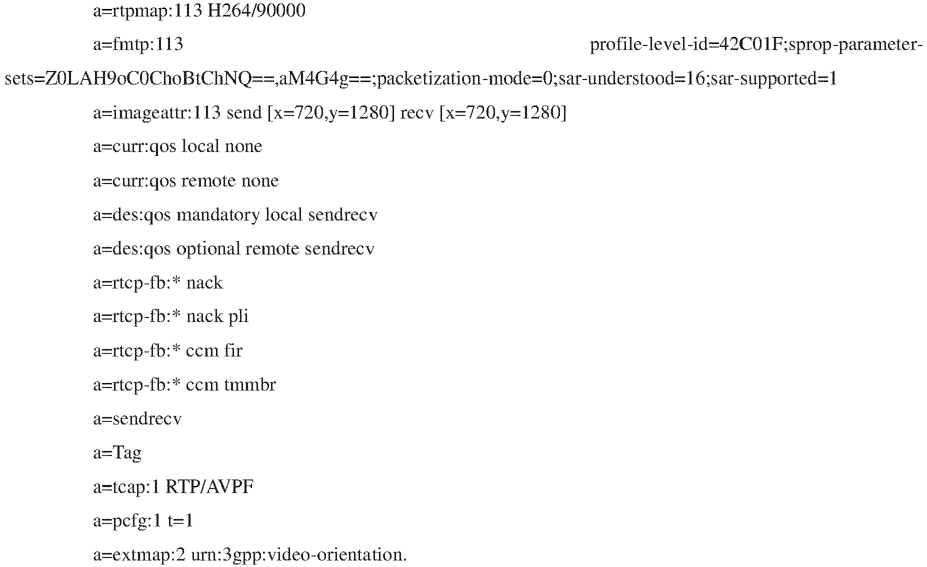

It may be understood that, according to the description of the SDP information, it can be learned that the SDP information may indicate whether the video call is a unidirectional video call or a bidirectional video call. Taking the call terminal and the peer call terminal as an example, the unidirectional video call may be used to transmit only a call video stream of the call terminal, but is not used to transmit a video stream of the peer call terminal. For example, the call terminal sends video content captured by the call terminal to the peer call terminal, and the peer call terminal displays the video content captured by the call terminal, but the peer call terminal does not capture video content or video content captured by the peer call terminal is not sent to the call terminal, that is, the video content captured by the peer call terminal is not displayed on the call terminal.

S607: The call terminal presents the first video picture on a call screen of the call terminal based on target media data.

In this embodiment of this application, the call screen is a screen presented on the call terminal in a process in which the call terminal performs a video call with the peer call terminal. The call screen may be a call window, a dialog box, or the like. This is not limited in this embodiment of this application.

Optionally, in this embodiment of this application, the target media data may be data received by the call terminal from the peer call terminal, or the target media data may be data locally obtained by the call terminal from the call terminal.

In an implementation, the target media data includes data corresponding to a first video frame, and the first video frame is received from the peer call terminal through the video call media transmission channel and is used to present the first video picture. In this case, S607 specifically includes S6071.

S6071: The call terminal decodes the data corresponding to the first video frame to present the first video picture on the call screen of the call terminal.

Optionally, the media server first receives video stream data (the video stream data is the call video stream) from the peer call terminal through the second video call media transmission channel, where the video stream data includes the data corresponding to the first video frame. Then, the media server sends the video stream data to the call terminal through the first video call media transmission channel. In this way, the call terminal obtains the data corresponding to the first video frame from the video stream data, and presents the first video picture on the call screen of the call terminal based on the data corresponding to the first video frame.

Optionally, the media server first receives video stream data (the video stream data is the call video stream) from the peer call terminal through the second video call media transmission channel, where the video stream data includes the data corresponding to the first video frame. Then, the media server obtains the data corresponding to the first video frame from the video stream data; and then the media server sends the data corresponding to the first video frame to the call terminal through the first video call media transmission channel. In this way, the call terminal may present the first video picture on the call screen of the call terminal based on the data corresponding to the first video frame.

In another implementation, the target media data includes data corresponding to a target image, and the target image is locally stored in the call terminal and is used to present the first video picture. In this case, S607 specifically includes S6072.

S6072: The call terminal decodes the data corresponding to the target image to present the first video picture on the call screen of the call terminal.

S608: The call terminal detects a mark operation performed by a user on the target object in the first video picture, and generates marking trace data, where the marking trace data describes a marking trace generated by the mark operation.

It may be understood that, in this embodiment of this application, a touch trace is a digital trace or a virtual trace.

In this embodiment of this application, the mark operation may be a tap operation on the first video picture, or may be a draw operation on a first whiteboard picture. For example, lines in different forms are drawn in the first video picture to mark the target object. For example, the target object is circled by using a rectangular box, a circle, a triangle, or an irregular closed shape, or the target object is marked by using a solid line, a dashed line, an arrow line, or another special symbol (for example, a five-pointed star is drawn beside the target object). A specific form of the mark operation is not limited in this embodiment of this application, and any operation that can mark the target object may be considered as the mark operation.

It may be understood that, after the user performs the mark operation on the target object in the first video picture, the marking trace corresponding to specific behavior of the mark operation can be formed, and the user can mark the target object in any manner in which the target object can be marked. The marking trace data includes but is not limited to a timestamp, a color, a shape, a location (for example, a location parameter such as coordinates of each point on the marking trace), or the like that can indicate the marking trace. For example, a marking trace in a video picture is a red circle, and marking trace data includes data indicating the video picture (for example, a timestamp or identification information of the video picture), data indicating that a color of the marking trace is red, data indicating that a shape of the marking trace is a circle, and data indicating circle center coordinates and a radius of the marking trace.

In this embodiment of this application, the call terminal may use a video marking tool on the call terminal, and invoke a function item in the video marking tool to perform the mark operation on the target object, where the video marking tool is system software built in the call terminal.

S609: The media server sends transmission channel indication information to the call terminal. Correspondingly, the call terminal receives the transmission channel indication information from the media server.

The transmission channel indication information indicates the call terminal to transmit marking media data through the video call media transmission channel. The marking media data is used to present a second video picture on a call screen of the peer call terminal, and the second video picture includes the foregoing marking trace. That is, after the peer call terminal receives the marking media data, the peer call terminal may present the second video picture on the call screen of the peer call terminal based on the marking media data.

Optionally, the transmission channel indication information may be carried in a SIP message. The SIP message and the SIP message in S605 may be a same message, or may be different SIP messages. This is not limited in this embodiment of this application.

The media server may indicate, by using an explicit indication method (that is, sending the transmission channel indication information) in S608, to transmit the marking media data through the video call media transmission channel. In some cases, the media server may alternatively indicate, by using an implicit indication method, to transmit the marking media data through the video call media transmission channel. For example, the SIP message in S605 carries the SDP information of the media server, and the response message for the SIP message carries the SDP information of the call terminal, to negotiate (or indicate) to transmit the marking media data through the video call media transmission channel established based on the pair of SDP information (the SDP information of the media server and the SDP information of the call terminal). It may be understood that the video call media transmission channel is originally used to transmit the call video stream.

S610: The call terminal transmits the marking media data to the peer call terminal through the video call media transmission channel, so that the peer call terminal presents the second video picture on the call screen of the peer call terminal based on the marking media data.

In an implementation, the video call media transmission channel includes the first video call media transmission channel between the call terminal and the media server, and the second video call media transmission channel between the peer call terminal and the media server, that is, the video call media transmission channel is an indirect transmission channel. In this case, S610 is specifically implemented through S6101 and S6102.

S6101: The call terminal transmits first marking media data to the media server through the first video call media transmission channel. Correspondingly, the media server receives the first marking media data from the call terminal through the first video call media transmission channel.

It may be understood that the first marking media data is used to present the second video picture on the peer call terminal.

It should be noted that, for S6101, in S609, the media server sends first transmission channel indication information to the call terminal, where the first transmission channel indication information indicates the call terminal to transmit the first marking media data through the first video call media transmission channel.

S6102: The media server transmits second marking media data to the peer call terminal through the second video call media transmission channel. Correspondingly, the peer call terminal receives the second marking media data from the media server through the second video call media transmission channel.

It may be understood that the second marking media data is also used to present the second video picture on the peer call terminal. The first marking media data and the second marking media data may be data of a same type, or may be data of different types.

It should be noted that, for S6102, before S609 is performed, the media server further sends second transmission channel indication information to the peer call terminal, where the second transmission channel indication information indicates the peer call terminal to transmit the second marking media data through the second video call media transmission channel.

In an implementation, the first marking media data and the second marking media data are the same, and both include data corresponding to a second video frame. In this case, before the call terminal transmits the marking media data to the media server, the call terminal presents, in a superimposition manner, the marking trace on the first video picture presented on the call screen of the call terminal, to form the second video picture, and sends, to the media server, the data corresponding to the second video frame used to present the second video picture. Then, the media server sends the data corresponding to the second video frame to the peer call terminal. In this way, after receiving the data corresponding to the second video frame, the peer call terminal can present the second video picture on the call screen of the peer call terminal.

In another implementation, the first marking media data and the second marking media data are the same, and both are the marking trace data. In this case, after the call terminal obtains the marking trace data, the call terminal sends the marking trace data to the media server. The media server forwards the marking media data to the peer call terminal. Then, the peer call terminal superimposes the target media data (the target media data is from video content captured by the peer call terminal) and the marking trace data to obtain the data corresponding to the second video frame, and presents the second video picture on the call screen of the peer call terminal based on the data corresponding to the second video frame.

In another implementation, the first marking media data is different from the second marking media data, the first marking media data is the marking trace data, and the second marking media data is the data corresponding to the second video frame. In this case, after the call terminal obtains the marking trace data, the call terminal sends the marking trace data to the media server. The media server superimposes the target media data (the target media data is obtained by the media server from the peer call terminal) and the marking trace data to obtain the data corresponding to the second video frame, and sends the data corresponding to the second video frame to the peer call terminal. Therefore, the peer call terminal may present the second video picture on the call screen of the peer call terminal based on the data corresponding to the second video frame.

In another implementation, the video call media transmission channel includes the direct video call media transmission channel between the call terminal and the peer call terminal, that is, the video call media transmission channel is a direct transmission channel. In this case, S610 is specifically implemented through S6101', that is, S6101 and S6102 are replaced with S6101'.

S6101': The call terminal transmits the marking media data to the peer call terminal through the direct video call media transmission channel between the call terminal and the peer call terminal.

In an implementation, the marking media data includes the data corresponding to the second video frame. In this case, the call terminal presents, in a superimposition manner, the marking trace on the first video picture presented on the call screen of the call terminal, to form the second video picture, and sends, to the peer call terminal, the data corresponding to the second video frame used to present the second video picture. In this way, after receiving the data corresponding to the second video frame, the peer call terminal can present the second video picture on the call screen of the peer call terminal.

In another implementation, the marking media data is the marking trace data. In this case, after the call terminal obtains the marking trace data, the call terminal sends the marking trace data to the peer call terminal. Then, the peer call terminal superimposes the target media data (the target media data is from video content captured by the peer call terminal) and the marking trace data to obtain the data corresponding to the second video frame, and presents the second video picture on the call screen of the peer call terminal based on the data corresponding to the second video frame.

Optionally, as shown in FIG. 6, before the marking media data is transmitted to the peer call terminal through the video call media transmission channel (that is, S610), the communication method provided in this embodiment of this application further includes S611.

S611: The call terminal stops transmitting the call video stream through the video call media transmission channel.

In the communication method provided in this embodiment of this application, transmission, through the video call media transmission channel, of video content (that is, the call video stream) captured by the call terminal or the peer call terminal is stopped between the call terminal and the peer call terminal, so that the marking media data can be transmitted through the video call media transmission channel.

Optionally, that the call terminal stops transmitting the call video stream through the video call media transmission channel specifically includes: before the first marking media data is received from the call terminal through the first video call media transmission channel, stopping transmitting the call video stream through the first video call media transmission channel; and before the second marking media data is transmitted to the peer call terminal through the second video call media transmission channel, stopping transmitting the call video stream through the second video call media transmission channel.

Optionally, when the media server serves as a transmission medium between the call terminal and the peer call terminal, after the media server obtains the data corresponding to the second video frame used to present the second video picture, the media server further performs mixed encoding processing (which may be referred to as screen mixing processing) on the video content captured by the call terminal and the data corresponding to the second video frame, and then sends a video stream obtained through screen mixing to the peer call terminal. In this way, a picture obtained through screen mixing on the second video picture and the content captured by the call terminal may be displayed on the peer call terminal. For example, the picture captured by the call terminal is displayed in a first area of the call screen of the peer call terminal, and the second video picture is displayed in a second area of the call screen of the peer call terminal.

It may be understood that, in this embodiment of this application, the call terminal may also cancel a video mark, and resume the original voice or video call. Specifically, the call terminal closes the video marking tool on the call terminal, and the call terminal sends a video marking end notification message to the media server, to notify the media server that a video marking process ends. In this way, subsequently, the voice or video call is resumed between the call terminal, the media server, and the peer call terminal, that is, the video call media transmission channel is no longer used to transmit the marking media data, but an original function of the video call media transmission channel is resumed, that is, the video call media transmission channel is used to transmit the call video stream.

Optionally, in this embodiment of this application, during a call between the call terminal and the peer call terminal, the call terminal may perform a mark operation on a target object in a video picture presented on the call terminal, and then send obtained marking media data to the peer call terminal. The peer call terminal may also perform a mark operation on a target object in a video picture presented on the peer call terminal, and then send obtained marking media data to the call terminal. A process in which the peer call terminal performs the mark operation and transmits the marking media data is similar to the foregoing process in which the call terminal performs the mark operation and transmits the marking media data.

In conclusion, according to the communication method provided in this embodiment of this application, the call terminal, the peer call terminal, and the media server in a communication system interact to establish the video call media transmission channel, and the call video stream between the call terminal and the peer call terminal is transmitted through the video call media transmission channel, to implement the video call service between the call terminal and the peer call terminal. The call video stream includes video content captured by the call terminal or the peer call terminal. Then, the call terminal presents the first video picture on the call screen of the call terminal based on the target media data, detects the mark operation performed by the user on the target object in the first video picture, generates the marking trace data, and transmits the marking media data to the peer call terminal through the video call media transmission channel, where the marking media data is used to present the second video picture on the call screen of the peer call terminal, and the second video picture includes the marking trace. According to the technical solution provided in embodiments of this application, the marking media data may be transmitted between the call terminal, the media server, and the peer call terminal based on an existing video call media transmission channel, there is no need to spend additional time establishing a transmission channel dedicated to transmitting the marking media data, and there is no need to occupy additional port resources of terminals (including the call terminal and the peer call terminal). In this way, port resources occupied when a target object in a video picture is marked during a call can be saved.

Further, compared with an existing communication method, in the technical solution provided in embodiments of this application, there is no need to install a video marking app on a user call terminal and a customer service call terminal. In this way, an operator does not need to perform a complex related operation, and the operator is not required to have a strong operation skill.

It may be understood that, in a service scenario of a manual customer service, a call terminal and a peer call terminal may be terminals of different roles. For example, the call terminal may be a customer service call terminal, and the peer call terminal may be a user call terminal; or the call terminal is a user call terminal, and the peer call terminal is a customer service call terminal.

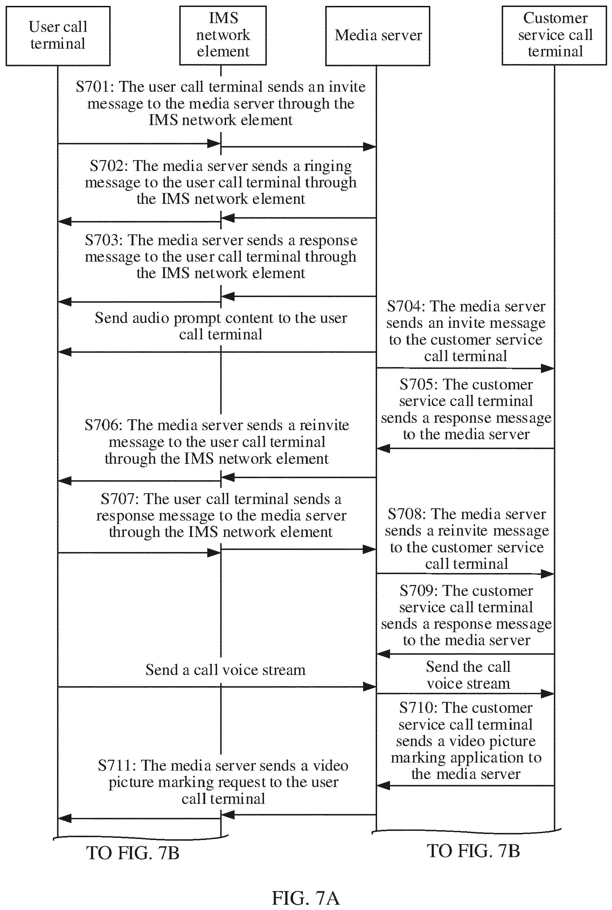

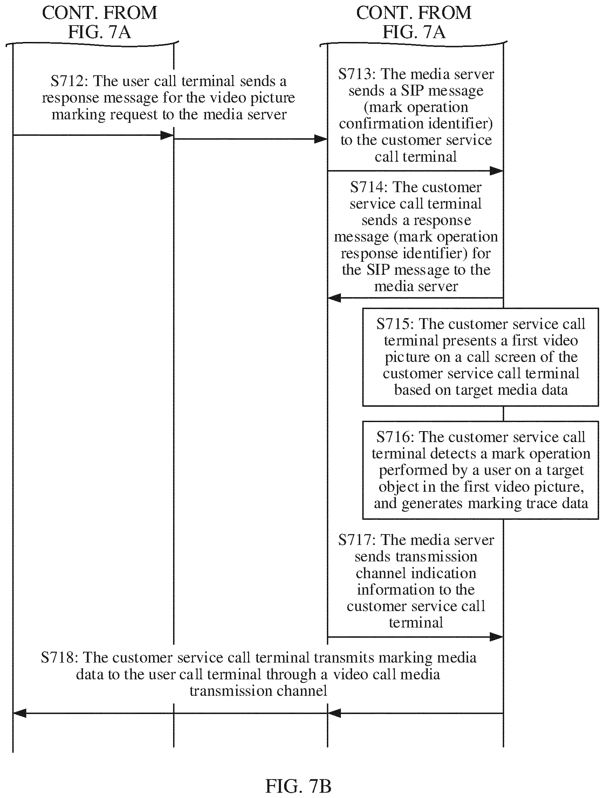

Based on the related description of the foregoing embodiments, it can be learned that a user call terminal that initiates a call may initiate a video call, or may initiate a voice call. The following describes in detail the communication method in embodiments of this application from a perspective of interaction between devices by using an example in which the call terminal is a customer service call terminal, the peer call terminal is one user call terminal, and a call initiated by the user call terminal is a voice call. As shown in FIG. 7A and FIG. 7B, a communication method provided in an embodiment of this application includes the following steps.

S701: The user call terminal sends an invite (invite) message to a media server through an IMS network element.

S702: The media server sends a ringing message to the user call terminal through the IMS network element.

S703: The media server sends a response message to the user call terminal through the IMS network element.

It may be understood that, after a customer service system answers a call of the user call terminal, the media server plays audio prompt content related to a user service, to prompt a user to select different service content (for example, select a manual service) according to a requirement. When the user performs an operation based on a prompt of the audio prompt content and selects the manual service, after the media server detects an operation of selecting the manual service, the media server allocates a customer service representative to the user (that is, selects a corresponding customer service call terminal for the user call terminal).

S704: The media server sends an invite (invite) message to the customer service call terminal.

S705: The customer service call terminal sends a response message to the media server.

S706: The media server sends a reinvite (reinvite) message to the user call terminal through the IMS network element.

The reinvite (reinvite) message includes SDP information of the media server, and the SDP information of the media server includes address information (for example, an IP address), audio port information, and an audio encoding/decoding format of the media server.

S707: The user call terminal sends a response message to the media server through the IMS network element.

The response message includes SDP information of the user call terminal, and the SDP information of the user call terminal includes address information (for example, an IP address), audio port information, and an audio encoding/decoding format of the user call terminal.

S708: The media server sends a reinvite (reinvite) message to the customer service call terminal.

The reinvite (reinvite) message includes the SDP information of the media server. For descriptions of the SDP information of the media server, refer to S706.

S709: The customer service call terminal sends a response message to the media server.

The response message includes SDP information of the customer service call terminal, and the SDP information of the customer service call terminal includes address information (for example, an IP address), audio port information, and an audio encoding/decoding format of the customer service call terminal.

S706 to S709 are a process in which the call terminal, the peer call terminal, and the media server interact to establish an indirect voice call media transmission channel between the user call terminal and the customer service call terminal through media resource negotiation.

It may be understood that, S701 to S709 are a process in which the user call terminal calls the customer service call terminal and establishes the voice call media transmission channel. For content carried in the messages in steps S701 to S709, refer to the foregoing detailed descriptions of S201 to S209. Details are not described herein again.

S710: The customer service call terminal sends a video picture marking application to the media server. Correspondingly, the media server receives the video picture marking application sent by the customer service call terminal.

The video picture marking application includes an identifier of the user call terminal, and the identifier is used to apply for a mark operation on a video picture (referred to as a first video picture below) corresponding to the user call terminal.

S711: The media server sends a video picture marking request to the user call terminal. Correspondingly, the user call terminal receives the video picture marking request from the media server.

The video picture marking request is used to request to perform a mark operation on the first video picture.

S712: The user call terminal sends a response message for the video picture marking request to the media server. Correspondingly, the media server receives the response message for the video picture marking request from the user call terminal.

The response message indicates that the user call terminal agrees the mark operation on the first video picture.

In this embodiment of this application, the video picture marking request further indicates that the voice call is requested to be converted into a video call, and the response message for the video picture marking request further indicates that the user call terminal agrees conversion from the voice call to the video call. When target media data used to present the first video picture is from data received by the customer service call terminal from the user call terminal, the response message for the video picture marking request further indicates that the user call terminal allows the media server to capture a call video stream sent by the user call terminal to the media server.

It should be noted that, the user call terminal initiates the voice call, and the voice call media transmission channel is established by using steps S706 to S709 in the foregoing embodiment. Because marking media data (the marking media data is used to present a second video picture, and the second video picture belongs to a video stream) needs to be obtained after the mark operation is performed on the target object in the video picture, but only a call voice stream can be transmitted and a video stream cannot be transmitted during a voice call, after the media server receives the video picture marking application, the media server triggers establishment of a video call media transmission channel, that is, the voice call needs to be converted into a video call, to establish the video call media transmission channel capable of transmitting a video stream. In addition, the video call media transmission channel is used to transmit the marking media data.

It may be understood that, the video call media transmission channel includes a video call media transmission channel (corresponding to the second video call media transmission channel in the foregoing embodiments) between the user call terminal and the media server, and a video call media transmission channel (corresponding to the first video call media transmission channel in the foregoing embodiments) between the customer service call terminal and the media server. The first video call media transmission channel and the second video call media transmission channel exist in pairs and are transmission channels used for communication between the customer service call terminal and the user call terminal.

In this embodiment of this application, S711 may correspond to the reinvite message, and the message carries the SDP information of the media server (the SDP information of the media server includes the address information, the audio port information, the audio encoding/decoding format, the video port information, and the video encoding/decoding format of the media server). In this case, S712 corresponds to the response message for the reinvite message, and the response message carries the SDP information of the user call terminal (the SDP information of the user call terminal, where the SDP information of the user call terminal includes the address information (for example, an IP address), the audio port information, the audio encoding/decoding format, the video port information, and the video encoding/decoding format of the user call terminal). In this way, media resource negotiation is performed by using the SDP information of the media server in the reinvite message and the SDP information of the user call terminal in the response message, to establish the second video call media transmission channel between the user call terminal and the media server.

A process of establishing the first video call media transmission channel includes the following S713 and S714.

S713: The media server sends a SIP message to the customer service call terminal. Correspondingly, the customer service call terminal receives the SIP message from the media server.

The SIP message includes a mark operation confirmation identifier and the SDP information of the media server, the mark operation confirmation identifier is used to confirm whether the call terminal has a resource for performing a mark operation on the first video picture, and the SDP information of the media server includes the address information, the audio port information, the audio encoding/decoding format, the video port information, and the video encoding/decoding format of the media server. It should be noted that, different from SDP information (including address information, audio port information, and an audio encoding/decoding format of a device) in a media resource negotiation message in a voice call scenario, SDP information in a media resource negotiation message in a video call scenario further includes video port information and a video encoding/decoding format of the device.

S714: The customer service call terminal sends a response message for the SIP message to the media server. Correspondingly, the media server receives the response message for the SIP message from the customer service call terminal.

The response message for the SIP message includes a mark operation response identifier and the SDP information of the customer service call terminal, the mark operation response identifier indicates that the call terminal has the resource for performing the mark operation on the first video picture, and the SDP information of the customer service call terminal includes the address information, the audio port information, the audio encoding/decoding format, the video port information, and the video encoding/decoding format of the customer service call terminal.

The SDP information of the media server in the SIP message and the SDP information of the customer service call terminal in the response message for the SIP message are used to perform media resource negotiation to establish the first video call media transmission channel between the media server and the customer service call terminal.

S715: The customer service call terminal presents the first video picture on a call screen of the customer service call terminal based on the target media data.

S716: The customer service call terminal detects a mark operation performed by a user on a target object in the first video picture, and generates marking trace data.

The marking trace data describes a marking trace generated by the mark operation.

S717: The media server sends transmission channel indication information to the customer service call terminal. Correspondingly, the customer service call terminal receives the transmission channel indication information from the media server.

The transmission channel indication information indicates the customer service call terminal to transmit marking media data through the video call media transmission channel. The marking media data is used to present the second video picture on a call screen of the peer call terminal, and the second video picture includes the foregoing marking trace.

In this case, a transmission channel for transmitting the marking media data is established, the transmission channel used for the marking media data is the video call media transmission channel, and based on the video call media transmission channel, the customer service call terminal may transmit the marking media data to the user call terminal.

S718: The customer service call terminal transmits the marking media data to the user call terminal through the video call media transmission channel, so that the user call terminal presents the second video picture on a call screen of the user call terminal based on the marking media data.

For descriptions of other details of S701 to S718, refer to related descriptions in the foregoing embodiments. Details are not described herein again.

Optionally, the user call terminal may perform a mark operation on the target object in the video picture. For example, the user call terminal performs a mark operation on the target object in the video picture of the video content received from the customer service call terminal, and sends marking media data to the customer service call terminal.

Correspondingly, an embodiment of this application provides a call terminal. The call terminal may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of the present invention is an example, and is merely logical function division. In actual implementation, there may be another division manner.

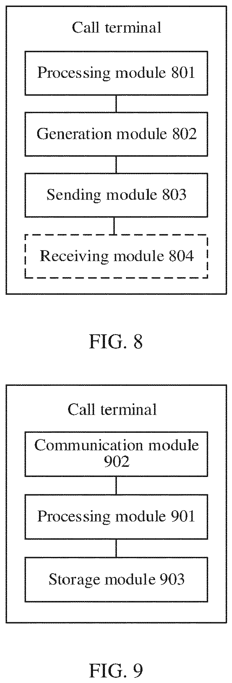

When each function module is obtained through division based on each corresponding function, FIG. 8 is a schematic diagram of a possible structure of the call terminal in the foregoing embodiments. As shown in FIG. 8, the call terminal includes a processing module 801, a generation module 802, and a sending module 803. The processing module 801 is configured to: establish a video call media transmission channel, and control the call terminal to transmit a call video stream between the call terminal and a peer call terminal through the video call media transmission channel, to implement a video call service between the call terminal and the peer call terminal, for example, perform S601 in the foregoing method embodiments. The processing module 801 is further configured to present a first video picture on a call screen of the call terminal based on target media data, for example, perform S607 and S715 in the foregoing method embodiments. The generation module 802 is configured to: detect a mark operation performed by a user on a target object in the first video picture, and generate marking trace data, where the marking trace data describes a marking trace generated by the mark operation, for example, perform S608 and S716 in the foregoing method embodiments. The sending module 803 is configured to transmit marking media data to the peer call terminal through the video call media transmission channel, so that the peer call terminal presents a second video picture on a call screen of the peer call terminal based on the marking media data, where the second video picture includes the marking trace, for example, perform S610 and S718 in the foregoing method embodiments.

Optionally, the target media data includes data corresponding to a first video frame, and the first video frame is received from the peer call terminal through the video call media transmission channel and is used to present the first video picture; and the processing module 801 is specifically configured to decode the data corresponding to the first video frame to present the first video picture on the call screen, for example, perform S6071 in the foregoing method embodiments.

Optionally, the target media data includes data corresponding to a target image, and the target image is locally stored in the call terminal and is used to present the first video picture; and the processing module 801 is specifically configured to decode the data corresponding to the target image to present the first video picture on the call screen, for example, perform S6072 in the foregoing method embodiments.

Optionally, the processing module 801 is further configured to control the call terminal to stop transmitting the call video stream through the video call media transmission channel, for example, perform S611 in the foregoing method embodiments.

Optionally, the video call media transmission channel includes a first video call media transmission channel between the call terminal and a media server, and a second video call media transmission channel between the peer call terminal and the media server. The sending module 803 is specifically configured to transmit first marking media data to the media server through the first video call media transmission channel, to trigger the media server to transmit second marking media data to the peer call terminal through the second video call media transmission channel, where both the first marking media data and the second marking media data are data used to present the second video picture, for example, perform S6101 and S6102 in the foregoing method embodiments.

Optionally, the video call media transmission channel is a direct video call media transmission channel between the call terminal and the peer call terminal; and the sending module 803 is specifically configured to transmit the marking media data to the peer call terminal through the direct video call media transmission channel, for example, perform S6101' in the foregoing method embodiments.

Optionally, the call terminal provided in this embodiment of this application further includes a receiving module 804. The receiving module 804 is configured to receive transmission channel indication information from the media server, where the transmission channel indication information indicates the call terminal to transmit the marking media data through the video call media transmission channel, for example, perform S609 and S717 in the foregoing method embodiments.

Optionally, the sending module 803 is further configured to send a video picture marking application to the media server, where the video picture marking application includes an identifier of the peer call terminal, and the identifier is used to apply for a mark operation on a video picture corresponding to the peer call terminal, for example, perform S602 and S710 in the foregoing method embodiments.

Optionally, the receiving module 804 is further configured to receive a SIP message from the media server, where the SIP message includes a mark operation confirmation identifier, and the mark operation confirmation identifier is used to confirm whether the call terminal has a resource for performing a mark operation on the first video picture, for example, perform S605 and S713 in the foregoing method embodiments. The sending module 803 is further configured to send a response message for the SIP message to the media server, where the response message includes a mark operation response identifier, and the mark operation response identifier indicates that the call terminal has the resource for performing the mark operation on the first video picture, for example, perform S606 and S714 in the foregoing method embodiments.

The modules of the call terminal may be further configured to perform other actions in the foregoing method embodiments. All related content of the steps in the foregoing method embodiments may be cited to function descriptions of corresponding function modules. Details are not described herein again.

When an integrated unit is used, FIG. 9 is a schematic diagram of another possible structure of the call terminal in the foregoing embodiments. As shown in FIG. 9, the call terminal provided in this embodiment of this application may include a processing module 901 and a communication module 902. The processing module 901 may be configured to control and manage an action of the call terminal. For example, the processing module 901 may be configured to support the call terminal in performing S601, S607 (including S6071 or S6072), S608, S611, S715, and S716 in the foregoing method embodiments, and/or another process of the technology described in this specification. The communication module 902 may be configured to support communication between the call terminal and another network entity. The communication module 902 integrates functions of the sending module 803 and the receiving module 804. The communication module 902 may be configured to support the call terminal in performing S602, S605, S606, S609, S610 (including S6101 and S6102), S6101', S710, S713, S714, S717, and S718 in the foregoing method embodiments. Optionally, as shown in FIG. 9, the call terminal may further include a storage module 903, configured to store program code and data of the call terminal, for example, a video picture of received video content and marking trace data.

The processing module 901 may be a processor. For example, the processor may be the processor 410 in FIG. 4A. The communication module 902 may be a transceiver, a transceiver circuit, a communication interface, or the like, for example, the mobile communication module 450 and/or the wireless communication module 460 in FIG. 4A. The storage module 903 may be a memory, for example, the internal memory 421 in FIG. 4A.

For more details that the modules included in the call terminal implement the foregoing functions, refer to the descriptions in the foregoing method embodiments. Details are not described herein again.

Correspondingly, an embodiment of this application provides a media server. The media server may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of the present invention is an example, and is merely logical function division. In actual implementation, there may be another division manner.

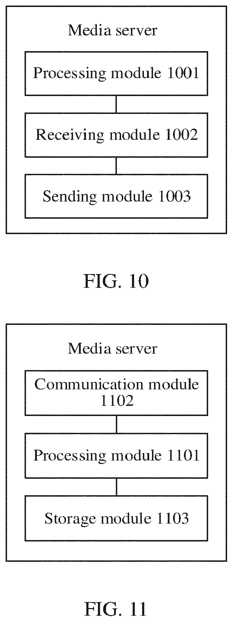

When each function module is obtained through division based on each corresponding function, FIG. 10 is a schematic diagram of a possible structure of the media server in the foregoing embodiments. As shown in FIG. 10, the media server includes a processing module 1001, a receiving module 1002, and a sending module 1003. The processing module 1001 is configured to: establish a first video call media transmission channel and a second video call media transmission channel, where the first video call media transmission channel is a video call media transmission channel between the media server and a call terminal, and the second video call media transmission channel is a video call media transmission channel between the media server and a peer call terminal; and control the receiving module or the sending module to transmit a call video stream between the call terminal and the peer call terminal through the first video call media transmission channel and the second video call media transmission channel, to implement a video call service between the call terminal and the peer call terminal, where the call video stream includes video content captured by the call terminal or the peer call terminal, for example, perform S601 in the foregoing method embodiments. The receiving module 1002 is configured to receive first marking media data from the call terminal through the first video call media transmission channel, where the first marking media data is used to present a second video picture on a call screen of the peer call terminal, the second video picture includes a marking trace, the marking trace is a marking trace generated by a mark operation performed by a user on a target object in a first video picture presented on a call screen of the call terminal, and the first video picture is a video picture presented on the call screen of the call terminal based on target data, for example, perform S6101 in the foregoing method embodiments. The sending module 1003 is further configured to transmit second marking media data to the peer call terminal through the second video call media transmission channel, where the second marking media data is used to present the second video picture on the call screen of the peer call terminal, for example, perform S6102 in the foregoing method embodiments.

Optionally, the sending module 1003 is configured to send first transmission channel indication information to the call terminal, where the first transmission channel indication information indicates the call terminal to transmit the first marking media data through the video call media transmission channel, for example, perform S609 and S717 in the foregoing method embodiments. The sending module 801 is further configured to send second transmission channel indication information to the peer call terminal, where the second transmission channel indication information indicates the peer call terminal to transmit the second marking media data through the video call media transmission channel.

Optionally, the processing module 1001 is further configured to control the media server to stop transmitting the call video stream through the first video call media transmission channel, for example, perform S611 in the foregoing method embodiments. In addition, the processing module 1001 is further configured to control the media server to stop transmitting the call video stream through the second video call media transmission channel.

Optionally, the receiving module 1002 is further configured to receive a video picture marking application from the call terminal, where the video picture marking application includes an identifier of the peer call terminal, and the identifier is used to apply for a mark operation on a video picture corresponding to the peer call terminal, for example, perform S602 and S710 in the foregoing method embodiments.

Optionally, the sending module 1003 is further configured to send a video picture marking request to the peer call terminal, where the video picture marking request is used to request to perform a mark operation on the first video picture, for example, perform S603 and S711 in the foregoing method embodiments. The receiving module 1002 is further configured to receive a response message for the video picture marking request from the peer call terminal, where the response message indicates that the peer call terminal agrees the mark operation on the first video picture, for example, perform S604 and S712 in the foregoing method embodiments.

Optionally, the sending module 1003 is further configured to send a SIP message to the call terminal, where the SIP message includes a mark operation confirmation identifier, and the mark operation confirmation identifier is used to confirm whether the call terminal has a resource for performing the mark operation on the video picture, for example, perform S605 and S713 in the foregoing method embodiments. The receiving module 1002 is further configured to receive a response message for the SIP message from the call terminal, where the response message includes a mark operation response identifier, and the mark operation response identifier indicates that the call terminal has the resource for performing the mark operation on the video picture, for example, perform S606 and S714 in the foregoing method embodiments.

The modules of the media server may be further configured to perform other actions in the foregoing method embodiments. All related content of the steps in the foregoing method embodiments may be cited to function descriptions of corresponding function modules. Details are not described herein again.

When an integrated unit is used, FIG. 11 is a schematic diagram of another possible structure of the media server in the foregoing embodiments. As shown in FIG. 11, the media server provided in this embodiment of this application may include a processing module 1101 and a communication module 1102. The processing module 1101 may be configured to control and manage an action of the media server. For example, the processing module 1101 may be configured to support the media server in performing S601 and S611 in the foregoing method embodiments, and/or another process of the technology described in this specification. The communication module 1102 may be configured to support communication between the media server and another network entity. The communication module 1102 integrates functions of the receiving module 1002 and the sending module 1003. The communication module 1102 may be configured to support the media server in performing S602, S603, S604, S605, S606, S609, S6101, S6102, S710, S711, S712, S713, S714, and S717 in the foregoing method embodiments. Optionally, as shown in FIG. 11, the media server may further include a storage module 1103, configured to store program code and data of the media server.

The processing module 1101 may be a processor. For example, the processor may be the processor 501 in FIG. 5. The communication module 1102 may be a transceiver, a transceiver circuit, a network interface, or the like, for example, the network interface 503 in FIG. 5. The storage module 1103 may be a memory, for example, the memory 502 in FIG. 5.

For more details that the modules included in the media server implement the foregoing functions, refer to the descriptions in the foregoing method embodiments. Details are not described herein again.

Embodiments in this specification are all described in a progressive manner, for same or similar parts in embodiments, mutual reference may be made to these embodiments, and each embodiment focuses on a difference from other embodiments.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid state drive (solid state drives, SSD)), or the like.

It may be clearly learned by a person skilled in the art from the foregoing description of the implementations that, for convenience and brevity of description, division into only the foregoing function modules is used as an example for description. In actual application, the foregoing functions may be allocated to different function modules for implementation according to a requirement, that is, an internal structure of an apparatus is divided into different function modules, to complete all or some of the functions described above. For a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the modules or units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application. However, the protection scope of this application is not limited thereto. Any change or replacement within the technical scope disclosed in this application shall fall within the protection scope of this application. Therefore, the protection scope of this application shall be subject to the protection scope of the claims.

## Claims

1. A communication method, wherein the method is performed by a call terminal, and the method comprises:
establishing a video call media transmission channel, and transmitting a call video stream between the call terminal and a peer call terminal through the video call media transmission channel, to implement a video call service between the call terminal and the peer call terminal;
presenting a first video picture on a call screen of the call terminal based on target media data;
detecting a mark operation performed by a user on a target object in the first video picture, and generating marking trace data, wherein the marking trace data describes a marking trace generated by the mark operation; and
transmitting marking media data to the peer call terminal through the video call media transmission channel, so that the peer call terminal presents a second video picture on a call screen of the peer call terminal based on the marking media data, wherein the second video picture comprises the marking trace.

2. The method according to claim 1, wherein
the target media data comprises data corresponding to a first video frame, the first video frame is received from the peer call terminal through the video call media transmission channel and is used to present the first video picture, and the presenting a first video picture on a call screen of the call terminal based on target media data comprises: decoding the data corresponding to the first video frame to present the first video picture on the call screen; or
the target media data comprises data corresponding to a target image, the target image is locally stored in the call terminal and is used to present the first video picture, and the presenting a first video picture based on target media data comprises: decoding the data corresponding to the target image to present the first video picture on the call screen.

3. The method according to claim 1 or 2, wherein
the marking media data comprises data corresponding to a second video frame, and the second video frame is used to present the second video picture in which the marking trace is embedded; or
the marking media data comprises the marking trace data.

4. The method according to any one of claims 1 to 3, wherein the method further comprises:
stopping transmitting the call video stream through the video call media transmission channel.

5. The method according to any one of claims 1 to 4, wherein
the video call media transmission channel comprises a first video call media transmission channel between the call terminal and a media server, and a second video call media transmission channel between the peer call terminal and the media server; and
the transmitting marking media data to the peer call terminal through the video call media transmission channel comprises: transmitting first marking media data to the media server through the first video call media transmission channel, to trigger the media server to transmit second marking media data to the peer call terminal through the second video call media transmission channel.

6. The method according to claim 5, wherein
both the first marking media data and the second marking media data comprise the data corresponding to the second video frame; or both the first marking media data and the second marking media data are the marking trace data; or
the first marking media data is the marking trace data, and the second marking media data is the data corresponding to the second video frame.

7. The method according to any one of claims 1 to 5, wherein
the video call media transmission channel is a direct video call media transmission channel between the call terminal and the peer call terminal; and
the transmitting marking media data to the peer call terminal through the video call media transmission channel comprises:
transmitting the marking media data to the peer call terminal through the direct video call media transmission channel.

8. The method according to any one of claims 1 to 7, wherein the method further comprises:
receiving transmission channel indication information from the media server, wherein the transmission channel indication information indicates the call terminal to transmit the marking media data through the video call media transmission channel.

9. The method according to any one of claims 1 to 8, wherein the method further comprises:
sending a video picture marking application to the media server, wherein the video picture marking application comprises an identifier of the peer call terminal, and the identifier is used to apply for a mark operation on a video picture corresponding to the peer call terminal.

10. The method according to any one of claims 1 to 9, wherein the method further comprises:
confirming that the call terminal has a resource for performing a mark operation on the first video picture.

11. The method according to claim 10, wherein the confirming that the call terminal has a resource for performing a mark operation on the first video picture comprises:
receiving a session initiation protocol SIP message from the media server, wherein the SIP message comprises a mark operation confirmation identifier, and the mark operation confirmation identifier is used to confirm whether the call terminal has the resource for performing the mark operation on the first video picture; and
sending a response message for the SIP message to the media server, wherein the response message comprises a mark operation response identifier, and the mark operation response identifier indicates that the call terminal has the resource for performing the mark operation on the first video picture.

12. A communication method, wherein the method is performed by a media server, and the method comprises:
establishing a first video call media transmission channel and a second video call media transmission channel, wherein the first video call media transmission channel is a video call media transmission channel between the media server and a call terminal, and the second video call media transmission channel is a video call media transmission channel between the media server and a peer call terminal; and transmitting a call video stream between the call terminal and the peer call terminal through the first video call media transmission channel and the second video call media transmission channel, to implement a video call service between the call terminal and the peer call terminal;
receiving first marking media data from the call terminal through the first video call media transmission channel, wherein the first marking media data is used to present a second video picture on a call screen of the peer call terminal, the second video picture comprises a marking trace, the marking trace is a marking trace generated by a mark operation performed by a user on a target object in a first video picture presented on a call screen of the call terminal, and the first video picture is a video picture presented on the call screen of the call terminal based on target data; and
transmitting second marking media data to the peer call terminal through the second video call media transmission channel, wherein the second marking media data is used to present the second video picture on the call screen of the peer call terminal.

13. The method according to claim 12, wherein
the target media data comprises data corresponding to a first video frame, and the first video frame is received by the call terminal from the peer call terminal through the first video call media transmission channel and is used to present the first video picture; or
the target media data comprises data corresponding to a target image, and the target image is locally stored in the call terminal and is used to present the first video picture.

14. The method according to claim 12 or 13, wherein
both the first marking media data and the second marking media data comprise data corresponding to a second video frame, and the second video frame is used to present the second video picture in which the marking trace is embedded;
both the first marking media data and the second marking media data are the marking trace data; or
the first marking media data is the marking trace data, and the second marking media data is the data corresponding to the second video frame.

15. The method according to any one of claims 12 to 14, wherein the method further comprises:
sending first transmission channel indication information to the call terminal, wherein the first transmission channel indication information indicates the call terminal to transmit the first marking media data through the first video call media transmission channel; and
sending second transmission channel indication information to the peer call terminal, wherein the second transmission channel indication information indicates the peer call terminal to transmit the second marking media data through the second video call media transmission channel.

16. The method according to any one of claims 12 to 15, wherein the method further comprises:
stopping transmitting the call video stream through the first video call media transmission channel; and
stopping transmitting the call video stream through the second video call media transmission channel.

17. The method according to any one of claims 12 to 16, wherein the method further comprises:
receiving a video picture marking application from the call terminal, wherein the video picture marking application comprises an identifier of the peer call terminal, and the identifier is used to apply for a mark operation on a video picture corresponding to the peer call terminal;
sending a video picture marking request to the peer call terminal, wherein the video picture marking request is used to request to perform a mark operation on the first video picture; and
receiving a response message for the video picture marking request from the peer call terminal, wherein the response message indicates that the peer call terminal agrees the mark operation on the first video picture.

18. The method according to any one of claims 12 to 17, wherein the method further comprises:
confirming that the call terminal has a resource for performing the mark operation on the first video picture.

19. The method according to claim 18, wherein the confirming that the call terminal has a resource for performing the mark operation on the first video picture comprises:
sending a session initiation protocol SIP message to the call terminal, wherein the SIP message comprises a mark operation confirmation identifier, and the mark operation confirmation identifier is used to confirm whether the call terminal has the resource for performing the mark operation on the first video picture; and
receiving a response message for the SIP message from the call terminal, wherein the response message comprises a mark operation response identifier, and the mark operation response identifier indicates that the call terminal has the resource for performing the mark operation on the first video picture.

20. A call terminal, comprising a processing module, a generation module, and a sending module, wherein
the processing module is configured to: establish a video call media transmission channel, and control the call terminal to transmit a call video stream between the call terminal and a peer call terminal through the video call media transmission channel, to implement a video call service between the call terminal and the peer call terminal; and present a first video picture on a call screen of the call terminal based on target media data;
the generation module is configured to: detect a mark operation performed by a user on a target object in the first video picture, and generate marking trace data, wherein the marking trace data describes a marking trace generated by the mark operation; and
the sending module is configured to transmit marking media data to the peer call terminal through the video call media transmission channel, so that the peer call terminal presents a second video picture on a call screen of the peer call terminal based on the marking media data, wherein the second video picture comprises the marking trace.

21. The call terminal according to claim 20, wherein
the target media data comprises data corresponding to a first video frame, and the first video frame is received from the peer call terminal through the video call media transmission channel and is used to present the first video picture; and
the processing module is specifically configured to decode the data corresponding to the first video frame to present the first video picture on the call screen; or
the target media data comprises data corresponding to a target image, and the target image is locally stored in the call terminal and is used to present the first video picture; and
the processing module is specifically configured to decode the data corresponding to the target image to present the first video picture on the call screen.

22. The call terminal according to claim 20 or 21, wherein
the marking media data comprises data corresponding to a second video frame, and the second video frame is used to present the second video picture in which the marking trace is embedded; or
the marking media data comprises the marking trace data.

23. The call terminal according to any one of claims 20 to 22, wherein
the processing module is further configured to control the call terminal to stop transmitting the call video stream through the video call media transmission channel.

24. The call terminal according to any one of claims 20 to 23, wherein
the video call media transmission channel comprises a first video call media transmission channel between the call terminal and a media server, and a second video call media transmission channel between the peer call terminal and the media server; and
the sending module is specifically configured to transmit first marking media data to the media server through the first video call media transmission channel, to trigger the media server to transmit second marking media data to the peer call terminal through the second video call media transmission channel.

25. The call terminal according to claim 24, wherein
both the first marking media data and the second marking media data comprise the data corresponding to the second video frame;
both the first marking media data and the second marking media data are the marking trace data; or
the first marking media data is the marking trace data, and the second marking media data is the data corresponding to the second video frame.

26. The call terminal according to any one of claims 20 to 25, wherein
the video call media transmission channel is a direct video call media transmission channel between the call terminal and the peer call terminal; and
the sending module is specifically configured to transmit the marking media data to the peer call terminal through the direct video call media transmission channel.

27. The call terminal according to any one of claims 20 to 26, wherein the call terminal further comprises a receiving module; and
the receiving module is configured to receive transmission channel indication information from the media server, wherein the transmission channel indication information indicates the call terminal to transmit the marking media data through the video call media transmission channel.

28. The call terminal according to any one of claims 20 to 27, wherein
the sending module is further configured to send a video picture marking application to the media server, wherein the video picture marking application comprises an identifier of the peer call terminal, and the identifier is used to apply for a mark operation on a video picture corresponding to the peer call terminal.

29. The call terminal according to any one of claims 20 to 28, wherein
the receiving module is further configured to receive a session initiation protocol SIP message from the media server, wherein the SIP message comprises a mark operation confirmation identifier, and the mark operation confirmation identifier is used to confirm whether the call terminal has a resource for performing a mark operation on the first video picture; and
the sending module is further configured to send a response message for the SIP message to the media server, wherein the response message comprises a mark operation response identifier, and the mark operation response identifier indicates that the call terminal has the resource for performing the mark operation on the video picture.

30. A media server, comprising a processing module, a receiving module, and a sending module, wherein
the processing module is configured to: establish a first video call media transmission channel and a second video call media transmission channel, wherein the first video call media transmission channel is a video call media transmission channel between the media server and a call terminal, and the second video call media transmission channel is a video call media transmission channel between the media server and a peer call terminal; and control the receiving module or the sending module to transmit a call video stream between the call terminal and the peer call terminal through the first video call media transmission channel and the second video call media transmission channel, to implement a video call service between the call terminal and the peer call terminal;
the receiving module is configured to receive first marking media data from the call terminal through the first video call media transmission channel, wherein the first marking media data is used to present a second video picture on a call screen of the peer call terminal, the second video picture comprises a marking trace, the marking trace is a marking trace generated by a mark operation performed by a user on a target object in a first video picture presented on a call screen of the call terminal, and the first video picture is a video picture presented on the call screen of the call terminal based on target data; and
the sending module is configured to transmit second marking media data to the peer call terminal through the second video call media transmission channel, wherein the second marking media data is used to present the second video picture on the call screen of the peer call terminal.

31. The media server according to claim 30, wherein
the target media data comprises data corresponding to a first video frame, and the first video frame is received by the call terminal from the peer call terminal through the first video call media transmission channel and is used to present the first video picture; or
the target media data comprises data corresponding to a target image, and the target image is locally stored in the call terminal and is used to present the first video picture.

32. The media server according to claim 30 or 31, wherein
both the first marking media data and the second marking media data comprise data corresponding to a second video frame, and the second video frame is used to present the second video picture in which the marking trace is embedded;
both the first marking media data and the second marking media data are the marking trace data; or
the first marking media data is the marking trace data, and the second marking media data is the data corresponding to the second video frame.

33. The media server according to any one of claims 30 to 32, wherein
the sending module is further configured to: send first transmission channel indication information to the call terminal, wherein the first transmission channel indication information indicates the call terminal to transmit the first marking media data through the video call media transmission channel; and send second transmission channel indication information to the peer call terminal, wherein the second transmission channel indication information indicates the peer call terminal to transmit the second marking media data through the video call media transmission channel.

34. The media server according to any one of claims 30 to 33, wherein
the processing module is further configured to: control the media server to stop transmitting the call video stream through the first video call media transmission channel; and control the media server to stop transmitting the call video stream through the second video call media transmission channel.

35. The media server according to any one of claims 30 to 34, wherein
the receiving module is further configured to receive a video picture marking application from the call terminal, wherein the video picture marking application comprises an identifier of the peer call terminal, and the identifier is used to apply for a mark operation on a video picture corresponding to the peer call terminal;
the sending module is further configured to send a video picture marking request to the peer call terminal, wherein the video picture marking request is used to request to perform a mark operation on the video picture; and
the receiving module is further configured to receive a response message for the video picture marking request from the peer call terminal, wherein the response message indicates that the peer call terminal agrees the mark operation on the video picture.

36. The media server according to any one of claims 30 to 35, wherein
the sending module is further configured to send a session initiation protocol SIP message to the call terminal, wherein the SIP message comprises a mark operation confirmation identifier, and the mark operation confirmation identifier is used to confirm whether the call terminal has a resource for performing the mark operation on the first video picture; and
the receiving module is further configured to receive a response message for the SIP message from the call terminal, wherein the response message comprises a mark operation response identifier, and the mark operation response identifier indicates that the call terminal has the resource for performing the mark operation on the first video picture.

37. A call terminal, comprising a memory and at least one processor connected to the memory, wherein the memory is configured to store computer program code, the computer program code comprises computer instructions, and when the computer instructions are executed by the at least one processor, the call terminal is enabled to perform the method according to any one of claims 1 to 11.

38. A media server, comprising a memory and at least one processor connected to the memory, wherein the memory is configured to store computer program code, the computer program code comprises computer instructions, and when the computer instructions are executed by the at least one processor, the media server is enabled to perform the method according to any one of claims 12 to 19.

39. A computer-readable storage medium, comprising computer instructions, wherein when the computer instructions are run on a call terminal, the call terminal is enabled to perform the method according to any one of claims 1 to 11.

40. A computer-readable storage medium, comprising computer instructions, wherein when the computer instructions are run on a server, the server is enabled to perform the method according to any one of claims 12 to 19.

41. A communication system, comprising a call terminal and a media server, wherein the call terminal performs the method according to any one of claims 1 to 11, and the media server performs the method according to any one of claims 12 to 19.
